# FASCICULE DE BREVET EUROPEEN

(11) **EP 3 100 656 B1**
(45) Date de publication et mention de la délivrance du brevet: **28.08.2019**
(21) Numéro de dépôt: 16171508.1
(22) Date de dépôt: 26.05.2016
(51) Int. Cl.: A47J 27/08, A47J 27/09

(54) **AUTOCUISEUR ÉQUIPÉ D'UN SUPPORT ET D'UN COUVERCLE MOBILE RELATIVEMENT AUDIT SUPPORT**
SCHNELLKOCHTOPF MIT EINER UNTERSTÜTZUNG UND EINEM BEWEGBAREN DECKEL
PRESSURE COOKER EQUIPPED WITH A SUPPORT AND A LID WHICH IS MOVABLE WITH RESPECT TO SAID SUPPORT

(30) Priorité: 04.06.2015 FR 1555110
(43) Date de publication de la demande: 07.12.2016
(73) Titulaire: SEB S.A., 69130 Ecully (FR)
(72) Inventeur: RHETAT, Eric, 21000 DIJON (FR); BARAILLE, Eric, Laurent, 21121 FONTAINE LES DIJON (FR)
(74) Mandataire: Weber, Jean-François

(56) Documents cités:
- EP-A1- 2 002 765
- DE-U1-202011 003 293
- FR-A1- 2 940 900

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression comportant une cuve, un couvercle, ainsi qu'un système de verrouillage.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve. Les appareils connus sont classiquement pourvus d'une soupape de régulation de pression destinée à maintenir le niveau de pression régnant dans l'enceinte de cuisson à un niveau de consigne. Il est connu d'équiper un tel appareil de cuisson de différents capteurs destinés à récolter des informations servant à contrôler différents paramètres de fonctionnement de l'appareil. Il est par exemple connu de disposer un capteur de température sur le couvercle d'un autocuiseur de manière à obtenir un signal électrique image de la température régnant en sortie d'un conduit de fuite de vapeur monté à l'aval de la soupape de régulation de pression équipant l'appareil. Le signal électrique de sortie de ce capteur de température est utilisé pour déclencher un minuteur. On connaît également des appareils de cuisson sous pression dotés d'un organe de commande monté mobile sur le couvercle entre ses différentes positions correspondant à différents réglages fonctionnels (par exemple une position de décompression et différentes positions de cuisson correspondant chacune respectivement à des valeurs de consignes de pression différentes). Le sélecteur en question embarque avantageusement un aimant destiné à exciter sélectivement une pluralité de capteurs embarqués dans un module électronique monté sur le couvercle. Un tel agencement permet d'obtenir un signal électrique représentatif de la position du sélecteur, afin d'utiliser cette information pour assister l'utilisateur dans l'utilisation de l'appareil, via une interface appropriée.

De tels appareils de cuisson sous pression donnent globalement satisfaction, mais n'en présentent certains inconvénients. En particulier, les capteurs dont il est question ci-dessus sont en permanence (dès lors qu'ils sont alimentés électriquement) dans un état de détection et peuvent de ce fait délivrer des informations sous forme de signaux électriques, même si l'autocuiseur n'est manifestement pas opérationnel. Cela peut conduire bien entendu à un risque de dysfonctionnement de l'autocuiseur résultant de l'exploitation d'informations erronées. En particulier, le capteur de température évoqué précédemment peut tout à fait fournir des signaux électriques interprétables alors même que l'autocuiseur n'est absolument pas en situation de fonctionner, par exemple parce que le couvercle n'a pas été rapporté et verrouillé sur la cuve, ce qui peut conduire à « *leurrer »* involontairement les systèmes électroniques associés (minuteur ou autres). Il est donc nécessaire de recourir à des moyens de contrôle (électroniques, logiciels, mécaniques...) additionnels pour parer à ces situations dysfonctionnelles, qui peuvent être perturbantes pour un utilisateur normalement averti. La mise en oeuvre de tels moyens additionnels complexifie en outre la construction de l'autocuiseur et majore son coût de fabrication. En outre, les systèmes de capteurs connus mis en oeuvre dans les appareils de cuisson sous pression de l'art antérieur sont très souvent adaptés à des types d'autocuiseurs particuliers, qui ont pour point commun de mettre en oeuvre un système de verrouillage/déverrouillage à mâchoires. De tels systèmes de capteurs connus sont en revanche peu, voire pas du tout, adaptés pour être mis en oeuvre sur des appareils de cuisson sous pression dont le système de verrouillage/déverrouillage repose sur un déplacement (qu'il s'agisse d'un déplacement global ou d'une déformation) du couvercle, comme par exemple les systèmes de verrouillage à baïonnette, à couvercle flexible ou à étrier.

Le document FR-2 940 900 décrit un autocuiseur muni d'un dispositif électronique d'information comprenant un premier organe de commande, un dispositif d'information relié au premier organe de commande pour émettre un signal caractéristique d'au moins une première position prédéterminée dudit premier organe de commande, lesdits dispositifs d'information et premier organe de commande étant reliés pour émettre ledit signal par l'intermédiaire d'au moins un capteur et d'au moins un activateur conçu pour exciter à distance ledit capteur.

Les objets assignés à l'invention visent en conséquence à porter remède aux différents inconvénients énumérés précédemment et à proposer un nouvel appareil de cuisson d'aliments sous pression capable de délivrer un signal d'information et/ou de commande de façon particulièrement simple, fiable et bon marché.

Un autre objet de l'invention vise à proposer un nouvel appareil de cuisson sous pression dont la conception permet de contrôler automatiquement, de façon particulièrement simple et efficace, que le couvercle est bien rapporté et verrouillé sur la cuve.

Un autre objet de l'invention vise à proposer un nouvel appareil de cuisson d'aliments sous pression particulièrement compact et léger.

Un autre objet de l'invention vise à proposer un nouvel appareil de cuisson sous pression qui permet de fournir de façon particulièrement simple et fiable non seulement une information quant à l'état verrouillé ou déverrouillé du couvercle, mais également des informations quant au début du cycle de cuisson à la pression de fonctionnement.

Un autre objet de l'invention vise à proposer un nouvel appareil de cuisson sous pression qui est particulièrement ergonomique et facile à utiliser, notamment à l'aide d'une seule main.

Un autre objet de l'invention vise à proposer un nouvel appareil de cuisson d'aliments sous pression qui présente une capacité élevée à suggérer de manière naturelle et intuitive sa propre utilisation.

Un autre objet de l'invention vise à proposer un nouvel appareil de cuisson d'aliments sous pression qui procure un haut niveau de sécurité d'utilisation.

Un autre objet de l'invention vise à proposer un nouvel appareil de cuisson d'aliments sous pression qui met en oeuvre un mécanisme de commande du verrouillage particulièrement robuste et compact.

Un autre objet de l'invention vise à proposer un nouvel appareil de cuisson d'aliments sous pression qui est facile et pratique à ranger et à laver en lave-vaisselle.

Les objets assignés à l'invention sont atteints à l'aide d'un appareil de cuisson d'aliments sous pression comportant une cuve, un couvercle, ainsi qu'un système de verrouillage, ledit appareil étant caractérisé en ce qu'il comprend un sous-ensemble de couvercle qui inclut à la fois ledit couvercle et un support attaché audit couvercle de façon que ce dernier puisse se déplacer relativement audit support entre deux positions correspondant respectivement à une configuration de déverrouillage et une configuration de verrouillage dudit sous-ensemble de couvercle, le sous-ensemble de couvercle et la cuve étant conçus pour être réunis selon au moins un agencement relatif prédéterminé permettant audit système de verrouillage de verrouiller le couvercle à la cuve par déplacement du couvercle relativement au support afin de faire passer le sous-ensemble de couvercle de sa configuration de déverrouillage à sa configuration de verrouillage, ledit sous-ensemble de couvercle comprenant un premier dispositif ainsi qu'un deuxième dispositif qui est capable, à la condition que lesdits premier et deuxième dispositifs soient séparés d'une distance n'excédant pas une valeur prédéterminée, d'exercer une influence sur le premier dispositif pour que ce dernier délivre en réponse un signal d'information et/ou de commande, lesdits support et couvercle embarquant respectivement l'un et l'autre desdits premier et deuxième dispositifs pour que lorsque ledit sous-ensemble de couvercle se trouve en configuration de verrouillage lesdits premier et deuxième dispositifs soient séparés d'une distance qui n'excède pas ladite valeur prédéterminée, et pour que lorsque ledit sous-ensemble de couvercle se trouve en configuration de déverrouillage lesdits premier et deuxième dispositifs soient séparés d'une distance qui excède ladite valeur prédéterminé.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :

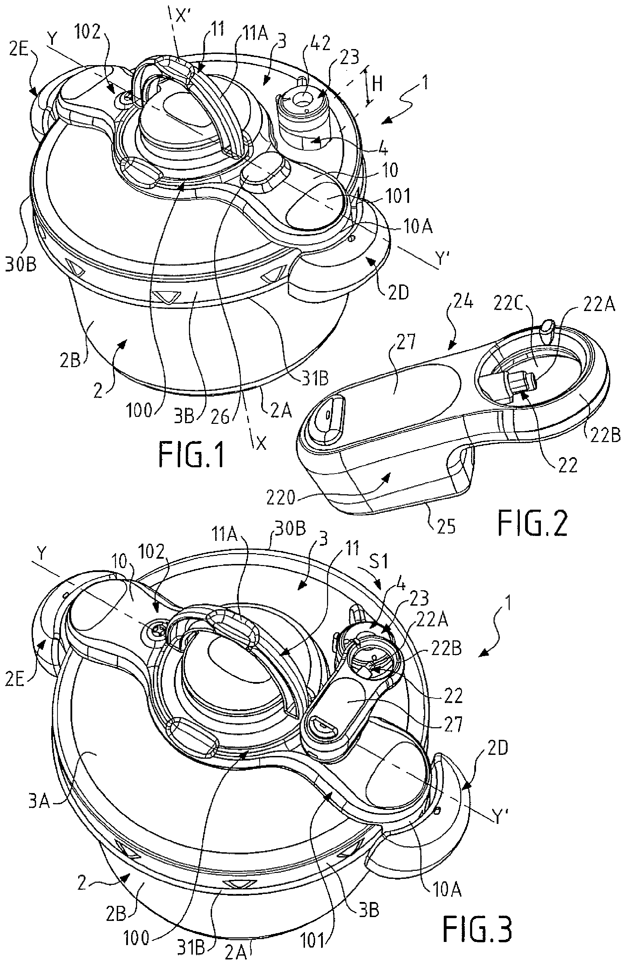

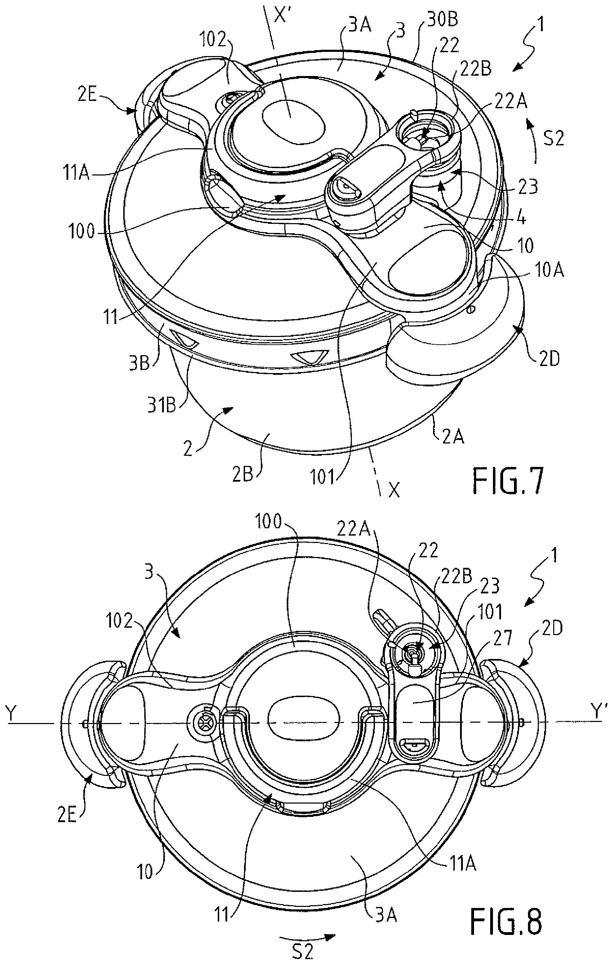

- La figure 1 illustre, selon une vue en perspective schématique, un appareil de cuisson d'aliments sous pression à verrouillage à baïonnette conforme à l'invention, dont le sous-ensemble de couvercle est en configuration de déverrouillage et est réuni avec la cuve selon l'agencement relatif prédéterminé (agencement de pré-verrouillage) permettant le verrouillage par déplacement du couvercle, ledit couvercle étant destiné à recevoir un premier dispositif amovible (absent de l'appareil de la figure 1) formant en l'espèce un module indépendant détachable embarquant un minuteur électronique et un capteur de température, ce dernier étant capable, lorsque le sous-ensemble de couvercle se trouve en configuration de verrouillage (figure 7), de déterminer la température d'un flux de vapeur issu d'un deuxième dispositif formé en l'espèce par une soupape de régulation de pression montée sur le couvercle.
- La figure 2 illustre, selon une vue en perspective schématique, ledit module indépendant détachable destiné à équiper le sous-ensemble de couvercle de l'appareil de la figure 1.
- La figure 3 illustre, selon une vue schématique en perspective, l'appareil de la figure 1 avec le module détachable de la figure 2 attaché au sous-ensemble de couvercle, lequel se trouve en configuration de déverrouillage.
- La figure 4 illustre, selon une vue schématique en perspective de dessus, la cuve de l'appareil de cuisson sous pression des figures 1 et 3, ladite cuve étant en l'espèce munie de deux poignées latérales permettant sa manipulation et son transport.
- La figure 5 représente le sous-ensemble de couvercle en configuration de déverrouillage, prêt à venir coiffer la cuve de la figure 4 selon l'agencement relatif prédéterminé de pré-verrouillage illustré à la figure 1.
- La figure 6 est une vue de dessus de l'autocuiseur de la figure 3.
- La figure 7 illustre, selon une vue schématique en perspective, l'appareil de cuisson de la figure 1 avec cette fois le sous-ensemble de couvercle en configuration de verrouillage, de sorte que le capteur du module indépendant surplombe la sortie de vapeur de la soupape de régulation de pression.
- La figure 8 illustre, selon une vue de dessus, l'appareil de cuisson de la figure 7.
- La figure 9 illustre, selon une vue schématique en perspective, un détail de réalisation de l'autocuiseur de la figure 1 concernant l'organe de commande du verrouillage/déverrouillage et le dispositif de transformation du déplacement de l'organe de commande en pivotement du couvercle dont est équipé l'autocuiseur en question.
- La figure 10 illustre, selon une vue schématique en perspective, une pièce en matière plastique formant le support de l'appareil des figures 1 à 9.
- La figure 11 illustre, selon une vue schématique en perspective, un détail de conception de l'autocuiseur des figures précédentes, permettant en particulier de visualiser la façon dont coopèrent le support et la poignée de cuve pour verrouiller le positionnement angulaire relatif, dans un plan horizontal, du sous-ensemble de couvercle et de la cuve lorsque ces derniers sont réunis selon ledit agencement relatif prédéterminé de pré-verrouillage susvisé.
- La figure 12 illustre, selon une vue de dessous, le détail de conception de la figure 11, à la différence près que la poignée de cuve a été omise.
- La figure 13 illustre, selon une vue schématique en perspective, un détail de réalisation de l'autocuiseur des figures précédentes, concernant plus précisément l'organe de commande du verrouillage/déverrouillage et le dispositif de transformation du déplacement de l'organe de commande en pivotement du couvercle relativement au support.
- Les figures 14 à 16 sont des vues analogues respectivement à celles des figures 9, 12 et 13, à la différence près que l'organe de commande est dans sa position rétractée correspondant au verrouillage du couvercle et que le sous-ensemble de couvercle se trouve par conséquent en configuration de verrouillage.
- La figure 17 illustre, selon une vue schématique en perspective, un détail de réalisation du sous-ensemble de couvercle, permettant de visualiser une partie du mécanisme de commande du pivotement du couvercle relativement au support.
- La figure 18 illustre, selon une vue schématique en coupe, un détail de réalisation de l'appareil des figures 7 et 8, permettant de visualiser la façon dont est positionné le capteur de température relativement à la soupape de régulation de pression lorsque le sous-ensemble de couvercle se trouve en configuration de verrouillage.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comporte au moins une cuve 2 formant récipient de cuisson, destiné à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 comprend un fond 2A et une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Avantageusement, et comme illustré aux figures, l'appareil de cuisson 1 comprend au moins une poignée de cuve 2D qui est fixée à ladite cuve 2, de façon à faire saillie extérieurement de cette dernière, et de préférence deux poignées identiques 2D, 2E fixées sur la paroi latérale 2B de !a cuve 2 de façon diamétralement opposée par rapport à l'axe central X-X'.

L'appareil 1 conforme à l'invention comprend également un couvercle 3 destiné à être associé à la cuve 2 et verrouillé relativement à cette dernière pour former une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité (non illustrée), formée de préférence par un joint annulaire souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur. Le couvercle 3 présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Dans le mode de réalisation illustré aux figures, le couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans ce mode de réalisation, le couvercle 3 inclut également avantageusement une ceinture annulaire 3B, par exemple de forme sensiblement cylindrique ou tronconique, qui s'élève entre un premier bord circulaire 30B solidaire de l'élément de couverture discoïde 3A (en l'espèce au niveau de la périphérie de ce dernier) et un second bord circulaire libre 31B, lequel est par exemple lui-même prolongé par une collerette terminale. Comme illustré aux figures, l'élément de couverture discoïde 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la ceinture annulaire 3B s'étend sensiblement verticalement, c'est-à-dire parallèlement à l'axe central X-X', la collerette terminale s'étendant quant à elle sensiblement horizontalement. Cela n'exclut bien entendu aucunement que l'élément de couverture discoïde 3A puisse être, tel qu'illustré aux figures, légèrement bombé ou incurvé localement, comme cela est bien connu en tant que tel. Dans le mode de réalisation illustré aux figures, la ceinture annulaire 3B est formée par un bord tombant qui s'étend vers le bas à partir de la périphérie de l'élément de couverture discoïde 3A. Dans ce mode de réalisation, le couvercle 3 est destiné à venir coiffer de façon sensiblement ajustée le sommet de la cuve 2, de sorte que la ceinture annulaire 3B entoure par l'extérieur le sommet de la paroi latérale annulaire 2B et le bord supérieur libre 2C, tandis que l'élément de couverture discoïde 3A repose en appui sur le bord libre 2C, par l'intermédiaire du joint d'étanchéité interposé entre la cuve 2 et le couvercle 3. Il est cependant parfaitement envisageable que la ceinture annulaire 3B soit alternativement destinée à être insérée au sein de la cuve 2, de façon à être entourée par, et contenue dans, la cuve 2, sans pour autant que l'on sorte du cadre de l'invention. Des organes de régulation 4 (décrit plus en détails ci-après) et de sécurité 6 sont avantageusement directement montés sur le couvercle 3.

L'appareil 1 conforme à l'invention comporte également un système de verrouillage conçu pour permettre à l'enceinte de cuisson formée par l'association du couvercle 3 et de la cuve 2 d'être pressurisée significativement (par exemple de l'ordre de 100 kPa au-dessus de la pression atmosphérique) sans risque de voir le couvercle 3 échapper sous l'effet de la pression régnant au sein de l'enceinte. De préférence, et conformément au mode de réalisation illustré aux figures, le système de verrouillage équipant l'appareil 1 est un système de verrouillage à baïonnette, conçu pour assurer le verrouillage et le déverrouillage du couvercle 3 relativement la cuve 2 par pivotement du couvercle 3 relativement la cuve 2, selon en l'espèce ledit axe vertical central X-X'. L'invention n'est cependant absolument pas limitée à la mise en oeuvre d'un système de verrouillage à baïonnette, et l'appareil 1 peut alternativement être équipé d'un système de verrouillage d'un autre type. Par exemple, le système de verrouillage peut-être un système de verrouillage basé sur le déplacement radial, relativement au couvercle 3, d'un élément de verrouillage, comme par exemple une mâchoire ou un segment, destiné à coopérer avec une conformation complémentaire de la cuve 2 (par exemple un bord roulé pour un système de verrouillage à mâchoire, ou une lumière ménagée à travers la paroi latérale 2A lorsqu'il s'agit d'un système de verrouillage à segment). L'élément de verrouillage est ainsi monté dans ce cas entre d'une part une position de verrouillage, dans laquelle chaque mâchoire enserre le couvercle et le bord supérieur roulé de la cuve (ou dans laquelle chaque segment pénètre dans la lumière ménagée dans la paroi latérale de la cuve) et d'autre part une position de déverrouillage obtenue par déplacement radial centrifuge de l'élément de verrouillage à partir de sa position de verrouillage, dans laquelle les mâchoires ne sont plus en prise avec le bord roulé de la cuve (ou dans laquelle les segments sont extraits hors de la lumière), ce qui permet à l'utilisateur de désolidariser librement le couvercle 3 de la cuve 2. Un tel système de verrouillage est décrit par exemple dans les documents EP-0 691 096, EP-0 691 097 ou encore EP-2 204 111, dont le contenu est incorporé par référence. Alternativement, le système de verrouillage peut reposer sur la mise en oeuvre d'un couvercle rentrant, par exemple d'un couvercle rentrant flexible comme décrit dans le document EP-1 938 718 dont le contenu est incorporé par référence. Il est également possible que le système de verrouillage soit un système de verrouillage à étrier, reposant sur la mise en oeuvre d'un élément allongé transversal monté à déplacement vertical sur le couvercle et dont les extrémités libres sont destinées à coopérer avec des oreillons solidaires de la cuve. De manière générale, l'invention pourra mettre en oeuvre tout type de système à verrouillage, et de préférence tout système de verrouillage reposant sur le déplacement relatif du couvercle et d'une pièce portée par le couvercle (qu'il s'agisse d'un étrier, d'un bras portant une mâchoire ou un segment, d'un support auquel est suspendu un couvercle flexible, etc.). De façon particulièrement préférentielle, le système de verrouillage est un système de verrouillage à baïonnette, permettant de faire passer l'appareil 1 d'une configuration d'attente de verrouillage, dans laquelle le couvercle 3 est rapporté sur la cuve 2 et repose librement sur cette dernière (figures 1 et 3), à une configuration de verrouillage dans laquelle la cuve 2 et le couvercle 3 interagissent pour empêcher leur libre séparation (cf. figure 7 et 8), et inversement. Ainsi, dans le mode de réalisation illustré aux figures, l'appareil 1 passe de sa configuration d'attente de verrouillage à sa configuration de verrouillage par rotation du couvercle 3 relativement à la cuve 2 selon une course angulaire prédéterminée autour de l'axe central X-X', dans un sens horaire S1, et passe de sa configuration de verrouillage à sa configuration d'attente de verrouillage par rotation du couvercle 3 relativement à la cuve 2 selon ladite course angulaire prédéterminée autour de l'axe central X-X' dans un sens antihoraire opposé S2 (alternativement, le sens S1 peut être antihoraire et le sens S2 peut être alors horaire). Le système de verrouillage à baïonnette de l'appareil de cuisson 1 comprend avantageusement à cet effet des première et deuxième séries d'excroissances 7A-7J, 8A-8J qui sont solidaires respectivement du couvercle 3 et de la cuve 2 et qui sont conçus, afin d'assurer le verrouillage et le déverrouillage du couvercle 3 relativement à la cuve 2, pour venir s'engager, respectivement se dégager, mutuellement par rotation du couvercle 3 relativement la cuve 2 autour de l'axe vertical central X-X' selon ladite course angulaire prédéterminée. Comme cela est bien connu en tant que tel, les excroissances 7A-7J, 8A-8J de chacune desdites première et deuxième séries sont destinées à coopérer deux à deux, c'est-à-dire que chaque excroissance de l'une desdites séries est amenée, par rotation du couvercle 3 relativement à la cuve 2, à passer sous une excroissance correspondante de l'autre série pour verrouiller le couvercle 3 relativement la cuve 2. Dans le mode de réalisation illustré aux figures, les excroissances 7A-7J de la première série, solidaires du couvercle 3, font saillie radialement vers l'intérieur du couvercle 3, tandis que les excroissances 8A-8J de la deuxième série, solidaires de la cuve 2, font saillie radialement à partir de la face externe de la paroi latérale 2B de la cuve 2, vers l'extérieur de cette dernière. Il est cependant parfaitement envisageable que les excroissances de verrouillage 7A-7J du couvercle fassent saillie vers l'extérieur du couvercle 3 et que les excroissances 8A-8J de cuve fassent alors saillies radialement vers l'intérieur de cette dernière. Dans l'exemple illustré aux figures, les excroissances 8A-8J de cuve sont formées par un rebord annulaire qui déborde vers l'extérieur à partir du bord supérieur libre 2C, des encoches 9A-9J étant ménagée à travers ledit rebord annulaire de façon à permettre le passage desdites excroissances 7A-7J de couvercle, de sorte que les portions dudit rebord annulaire qui s'étendent entre chaque encoche 9A-9J forment les rampes de cuve respectives destinées à coopérer avec les excroissances 7A-7J de couvercle qui forment les rampes de couvercle. Ainsi, lorsque le couvercle 3 vient coiffer la cuve 2, les excroissances 7A-7J de couvercle peuvent passer par les encoches 9A-9J pour se retrouver plus bas que le rebord annulaire. L'appareil 1 se trouve alors dans sa configuration de pré-verrouillage (également appelée configuration d'attente de verrouillage), à partir de laquelle la configuration de verrouillage peut être atteinte en faisant simplement tourner le couvercle 3 relativement à la cuve 2 selon l'axe vertical X-X', ce qui a pour effet de décaler angulairement les excroissances 7A-7J du couvercle 3 et les encoches 9A-9J du rebord annulaire, réalisant un verrouillage de type « à *baïonnette* ». De préférence, dans le mode de réalisation illustré aux figures, les excroissances de couvercle 7A-7B sont localisées sur la ceinture annulaire 3B du couvercle 3 à distance du second bord libre circulaire 31B de ladite ceinture annulaire 3B, de manière à ce que la ceinture annulaire 3B forme, en deçà desdits éléments en volume, une jupe d'auto-centrage du couvercle 3 relativement à la cuve 2.

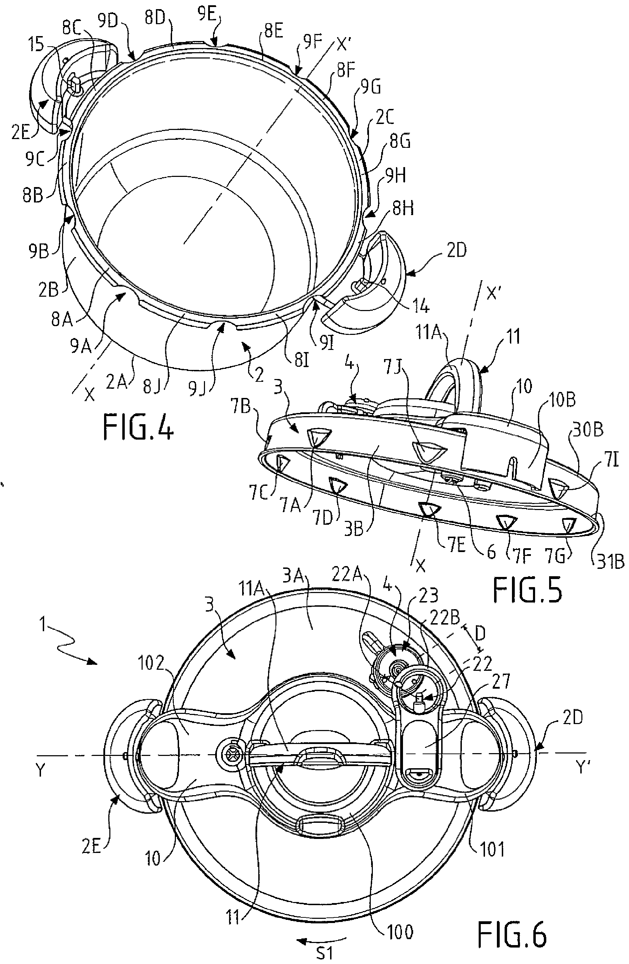

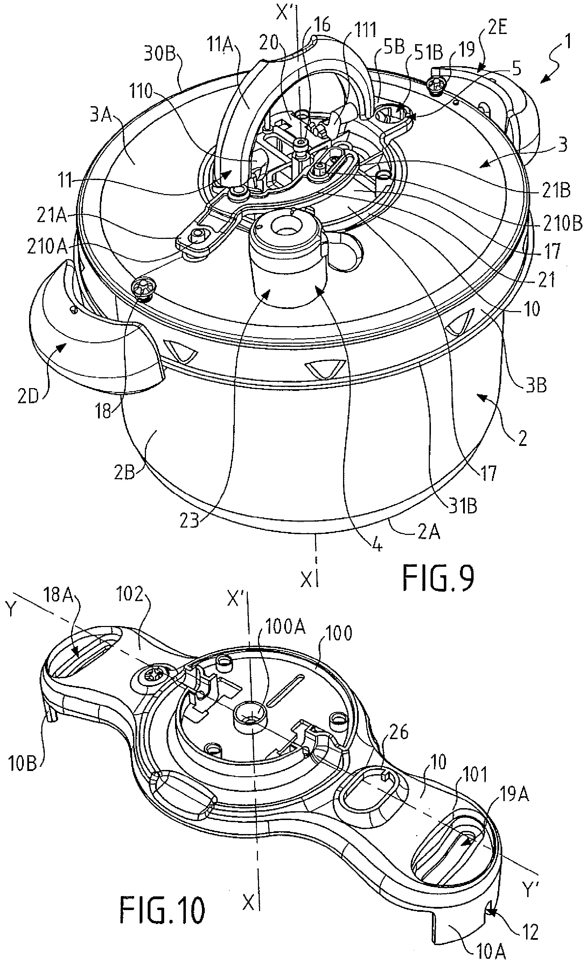

Conformément à l'invention, l'appareil 1 comprend un sous-ensemble de couvercle (illustré isolément par la figure 5) qui inclut à la fois le couvercle 3 et un support 10 attaché audit couvercle 3, en l'espèce de façon permanente, de façon que ce dernier puisse se déplacer relativement audit support 10 entre deux positions correspondant respectivement à une configuration de déverrouillage et une configuration de verrouillage dudit sous-ensemble de couvercle. Dans le mode de réalisation illustré aux figures, le support 10 est attaché au couvercle 3 de façon que ce dernier puisse pivoter relativement audit support 10 entre lesdites deux positions selon l'axe vertical central X-X'. L'invention n'est cependant pas limitée à un montage à rotation du couvercle 3 relativement support 10. Il est par exemple tout à fait envisageable, dans le cas où le système de verrouillage est par exemple un système de verrouillage à couvercle flexible, que le couvercle 3 puisse se déplacer à translation relativement au support, comme décrit dans le document EP-1 938 718. La liaison pivot entre le couvercle 3 et le support 10 peut être réalisée par tout moyen connu. En l'espèce, les deux positions entre lesquelles le couvercle 3 peut pivoter relativement au support 10 sont séparées par une course angulaire prédéterminée correspondant à celle requise pour faire passer l'appareil 1 de sa configuration de pré-verrouillage (configuration d'attente de verrouillage) illustrée à la figure 1 à sa configuration de verrouillage illustrée par exemple aux figures 7 et 8. Avantageusement, le support 10 se présente, dans le mode de réalisation illustré aux figures, sous la forme d'une traverse, c'est-à-dire d'une pièce sensiblement allongée qui s'étend diamétralement sur le couvercle 3 et qui se prolonge en l'espèce à chacune de ses extrémités par des bords tombants respectifs 10A, 10B. De préférence, la traverse en question comporte une zone centrale élargie 100, par exemple de forme globalement circulaire, prolongée de part et d'autre par un premier bras 101 et un deuxième bras 102 qui eux-mêmes se terminent respectivement par lesdits bords tombants 10A, 10B. La portion centrale 100 est avantageusement pourvue d'un orifice central 100A dans lequel est destiné à être enfilé un axe 30 fixé sur le couvercle 3, au centre de ce dernier, et autour duquel le support 10 est destiné à tourner selon l'axe vertical central X-X'. De préférence, l'axe 30 est pourvu d'un évidement fileté destiné à coopérer avec une vis 16 afin de fixer le support 10 au couvercle 3 tout en permettant au couvercle 3 de pivoter autour de l'axe 30. Avantageusement, le support 10 comprend, outre la pièce en forme de traverse illustrée à la figure 10, une platine 17 qui présente une forme globalement circulaire sensiblement complémentaire de celle de la portion centrale 100 de la traverse et qui est destinée à être interposée entre ladite traverse et la face supérieure du couvercle 3 pour former un boîtier destiné à accueillir au moins en partie un mécanisme de commande. La traverse visible à la figure 10 est elle-même conçue pour être fixée (par exemple au moyen de plusieurs vis) de manière permanente à la platine 17, afin de former avec cette dernière un sous-ensemble de traverse unitaire, monobloc, maintenu sur le couvercle 3 au moyen de l'accouplement axe 30 / vis 16, lequel accouplement autorise le pivotement du couvercle 3 relativement au sous-ensemble de traverse précité formant en l'espèce le support 10. En outre, dans le mode de réalisation illustré aux figures, l'appareil 1 comprend au moins un pion de guidage 18, et de préférence deux pions de guidage 18, 19 disposés de façon diamétralement opposée relativement à l'axe central X-X' et attachés au couvercle 3 de façon permanente. Chacun desdits pions de guidage 18, 19 est conçu pour coulisser au sein d'une gorge allongée complémentaire de guidage 18A, 19A ménagée dans le support 10, par exemple vers chaque extrémité dudit support 10. La longueur de chaque gorge 18A, 19A est adaptée en l'espèce à la course angulaire du couvercle 3 relativement au support 10. Chaque pion 18, 19 est en outre pourvu d'une tête de section élargie qui coopère avec les bords de la gorge correspondante 18A, 19A pour retenir verticalement le support 10 et l'empêcher de s'écarter verticalement du couvercle 3.

Conformément à l'invention, le sous-ensemble de couvercle et la cuve 2 sont conçus pour être réunis selon au moins un agencement relatif prédéterminé (illustré par exemple aux figures 1 et 3) permettant audit système de verrouillage de verrouiller le couvercle 3 à la cuve 2 par déplacement du couvercle 3 relativement au support 10 afin de faire passer le sous-ensemble de couvercle de sa configuration de déverrouillage à sa configuration de verrouillage. Plus précisément, l'agencement relatif prédéterminé est en l'espèce obtenu par réunion de la cuve 2 et du sous-ensemble de couvercle lorsque ce dernier se trouve en configuration de déverrouillage. Dans le mode de réalisation illustré aux figures, ledit agencement relatif prédéterminé permet au système de verrouillage à baïonnette de verrouiller le couvercle 3 à la cuve 2 par pivotement du couvercle 3 relativement au support 10 selon ledit axe vertical central X-X'. En d'autres termes, lorsque le sous-ensemble de couvercle est en configuration de déverrouillage, le couvercle 3 et le support 10 sont positionnés l'un relativement à l'autre de telle manière que l'accostage du support 10 sur la cuve 2 selon une position prédéterminée, correspondant audit agencement relatif prédéterminé, permet de faire passer les rampes de couvercle 7A-7J en deçà des rampes de cuve 8A-8J par les encoches 9A-9J séparant lesdites rampes de cuve 8A-8J, le sous-ensemble de couvercle coiffant alors la cuve 2 dans une position d'attente, à partir de laquelle il suffira de faire pivoter le couvercle 3 relativement à la cuve 2 pour verrouiller le couvercle 3 relativement à la cuve 2. Ainsi, une fois la cuve 2 et le sous-ensemble de couvercle en configuration de déverrouillage réunis selon l'agencement relatif prédéterminé de pré-verrouillage illustré à la figure 1, il suffit de maintenir le support 10 en position relativement à la cuve 2 et de faire pivoter le couvercle 3 relativement au support 10 selon la course angulaire prédéterminée susvisée afin d'amener les rampes de couvercle en correspondance avec les rampes de cuve, sous ces dernières, verrouillant ainsi le couvercle 3 relativement à la cuve 2.

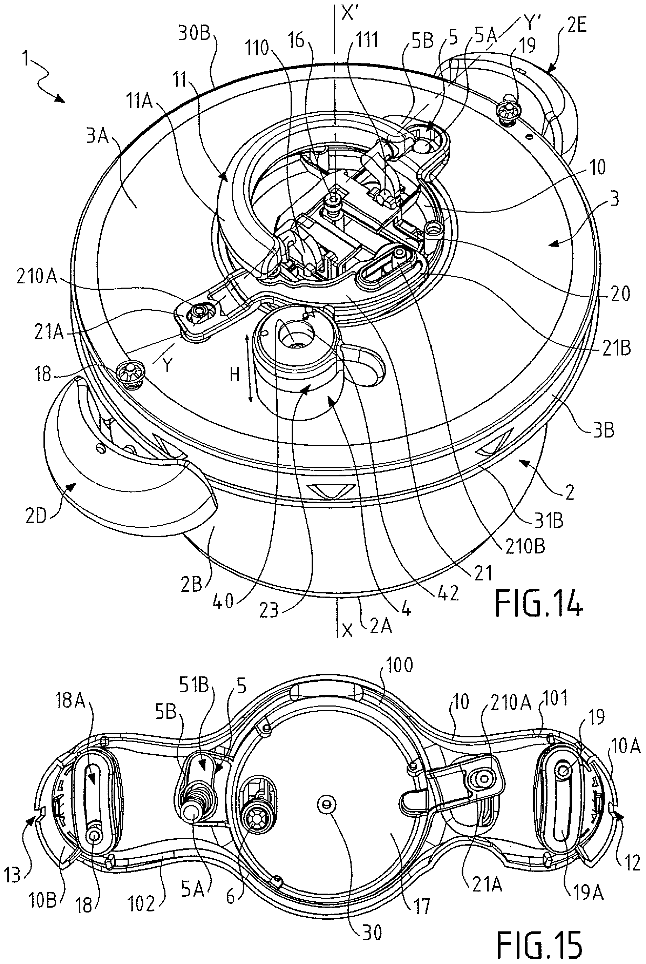

L'appareil 1 comprend par ailleurs un organe de commande 11 du verrouillage/déverrouillage, conçu en l'espèce pour être manipulé (en l'espèce directement) par l'utilisateur de façon à permettre à ce dernier de contrôler le système de verrouillage afin de pouvoir avantageusement faire passer, par actionnement manuel de l'organe de commande 11, le sous-ensemble de couvercle de sa configuration de verrouillage à sa configuration de déverrouillage et vice-versa, ce qui permet ainsi de commander le passage de l'appareil 1 de sa configuration de pré-verrouillage (également appelée configuration d'attente de verrouillage - illustrée à la figure 1) à sa configuration de verrouillage (illustrée à la figure 8), et inversement. Dans ce mode de réalisation illustré aux figures, le support 10 n'est donc pas conçu pour être actionné manuellement afin de commander le déplacement du couvercle 3 entre ses positions de verrouillage et déverrouillage, cette fonction étant en l'espèce dévolue exclusivement à l'organe de commande 11. Conformément au mode de réalisation illustré aux figures, l'organe de commande 11 est distinct du support 10, tout en étant par exemple attaché audit support 10, en l'espèce de façon permanente, de façon à pouvoir être déplacé manuellement relativement à ce dernier entre des positions de verrouillage (figures 7 et 8) et de déverrouillage (figure 1) et inversement. En d'autres termes, le support 10 embarque avantageusement de façon permanente l'organe de commande 11, lequel conserve cependant une faculté de mobilité relativement audit support 10. Avantageusement, l'appareil 1 comprend également un dispositif de transformation du déplacement de l'organe de commande 11 en pivotement du couvercle 3 relativement au support 10 selon l'axe vertical central X-X', pour que lesdites positions de verrouillage et déverrouillage de l'organe de commande 11 correspondent respectivement auxdites configurations de verrouillage et déverrouillage du sous-ensemble de couvercle. L'utilisateur peut ainsi commander le passage du sous-ensemble de couvercle de sa configuration de déverrouillage à sa configuration de verrouillage, et vice versa, par déplacement manuel de l'organe de commande 11 relativement au support 10 entre ses positions de déverrouillage et de verrouillage, et inversement. Le dispositif de transformation, qui est en particulier visible aux figures 9 et 12 à 17 est donc conçu pour convertir le mouvement de l'organe de commande 11 relativement au support 10 en mouvement rotatif du couvercle 3 relativement à ce même support 10, en l'espèce selon ledit axe vertical central X-X', de sorte que l'utilisateur peut ainsi commander le verrouillage/déverrouillage par pivotement du couvercle 3 relativement au support 10 par simple manipulation de l'organe de commande 11, une fois le couvercle 3 rapporté sur la cuve 2 avec les rampes de couvercle disposées en deçà des rampes de cuve. Bien entendu, le dispositif de transformation susvisé est conçu en fonction de la nature du déplacement de l'organe de commande 11 relativement au support 10 et pourra mettre en oeuvre tout composant d'entraînement (roue dentée, came, levier, biellette, etc.) requis. Avantageusement, ledit organe de commande 11 est monté à pivotement relativement audit support 10 selon un axe radial de pivotement Y-Y' qui est perpendiculaire à l'axe vertical central X-X', et est sécant à ce dernier. L'organe de commande 11 peut ainsi se présenter sous la forme d'un élément rotatif du type poignée, levier, manette, anse...Il est cependant tout à fait envisageable que l'organe de commande 11 soit plutôt monté à translation relativement support 10, et se présente par exemple dans ce cas sous la forme d'un élément coulissant tel qu'un bouton-poussoir, un curseur, etc. Avantageusement, ledit dispositif de transformation comprend un mécanisme démultiplicateur conçu pour entraîner le couvercle 3 en rotation autour dudit axe vertical central X-X' selon une course présentant une première amplitude angulaire prédéterminée a, en réponse à une rotation dudit organe de commande 11 autour dudit axe radial Y-Y' selon une course présentant une seconde amplitude angulaire prédéterminée β supérieure à ladite première amplitude angulaire prédéterminée a. Par exemple, l'organe de commande 11 est conçu pour pivoter autour dudit axe radial Y-Y' entre une position relevée (correspondant au déverrouillage) et une position rabattue (correspondant au verrouillage) séparées par une course présentant une amplitude angulaire prédéterminée β d'environ 90°, tandis que le couvercle 3 pivote relativement au support 10, en réponse au déplacement angulaire d'environ 90° de l'organe de commande 11 relativement au support 10, selon une course présente une amplitude angulaire prédéterminée α d'environ 15°. Conformément au mode de réalisation illustré aux figures, le dispositif de transformation comprend une pièce de transmission 20 montée mobile en translation dans un plan horizontal perpendiculaire audit axe vertical central X-X' relativement audit support 10. Dans ce mode de réalisation, le dispositif de transformation comprend un mécanisme de transformation du mouvement de pivotement de l'organe de commande 11 relativement au support 10 en mouvement de translation de ladite pièce de transmission 20 relativement audit support 10. Par exemple, le mécanisme de transformation en question est formé par une came 110, 111 solidaire de l'organe de commande 11, ladite came 110, 111 étant pourvue d'un pion qui est reçu dans un logement correspondant ménagé dans la pièce de transmission 20, de façon que le pivotement de l'organe de commande 11 entraîne le pivotement concomitant de la came 210A, 210B, laquelle repousse alors la pièce de transmission 20 dans le plan horizontal perpendiculaire à l'axe vertical central X-X'. Avantageusement, le dispositif de transformation comprend, conformément au mode de réalisation illustré aux figures, au moins un levier horizontal 21 monté à pivotement relativement au support 10 selon un axe vertical excentré Z-Z' qui est fixe par rapport audit support 10, parallèle audit axe vertical central X-X' et situé à une distance prédéterminée de ce dernier. De préférence, comme illustré aux figures, ledit levier horizontal 21 s'étend longitudinalement entre une première extrémité 21A articulée au couvercle 3 et une deuxième extrémité 21B articulée soit audit organe de commande 11 soit à une pièce de transmission (comme par exemple la pièce de transmission 20 évoquée ci-avant) qui fait partie du dispositif de transformation et qui est entraînée en déplacement relativement au support 10 par l'organe de commande 11, par exemple selon le mode de réalisation exposé précédemment. De préférence, ledit levier horizontal 21 est monté à pivotement relativement au support 10 en un point de pivotement situé entre lesdites première extrémité 21A et deuxième extrémité 21B, de sorte que l'axe vertical excentré Z-Z' passe par une zone du levier horizontal 21 qui est située à distance à la fois de la première et de la deuxième extrémité 21A, 21B. L'articulation de la première extrémité 21A relativement au couvercle 3 est par exemple réalisée au moyen d'un premier goujon 210A qui est solidaire du couvercle 3 de manière à s'élever verticalement à partir de ce dernier. Ledit goujon 210A est avantageusement reçu dans une première gorge correspondante ménagée à la première extrémité 21A du levier horizontal 21, de sorte que ledit premier goujon 210A peut à la fois coulisser et tourner dans la première gorge en question. Le dispositif de transformation comporte également avantageusement un deuxième goujon 210B qui est en l'espèce solidaire de la pièce de transmission 20 et embarqué sur cette dernière. Ledit deuxième goujon 210B est avantageusement reçu dans une deuxième gorge complémentaire ménagée à la deuxième extrémité 21B du levier horizontal 21, de façon que ledit deuxième goujon 210B puisse à la fois coulisser et pivoter dans la deuxième gorge en question. Le déplacement en translation rectiligne de la pièce de transmission 20 dans le plan horizontal est ainsi converti en rotation du levier 21 autour de l'axe vertical excentré Z-Z', rotation qui est elle-même convertie en une rotation du couvercle 3 relativement au support 10 selon l'axe vertical central X-X'. L'invention n'est cependant absolument pas limitée à un tel mécanisme de transformation de mouvement et il est par exemple parfaitement envisageable de mettre en oeuvre, en lieu et place d'un système à levier comme illustré, un système à biellette, à came ou à engrenage, ou tout autre système connu, sans pour autant que l'on sorte du cadre invention. Avantageusement, et comme illustré aux figures, l'organe de commande 11 comprend une anse 11A destinée être actionnée manuellement afin de pouvoir être déplacée à la main par un utilisateur entre deux positions de butées, préférentiellement stables, correspondant respectivement au verrouillage et au déverrouillage. Dans ce mode de réalisation préféré l'organe de commande 11 se présente donc sous la forme d'une pièce arquée, en forme de boucle, d'arche, avantageusement conçue pour pouvoir être saisie fermement, de préférence à pleine main, par un utilisateur. L'invention n'est toutefois pas limitée à la mise en oeuvre d'une anse pour former l'organe de commande 11 et ce dernier peut par exemple être constitué par un levier sensiblement rectiligne, ou avec un profil en forme de T, de L, une forme de pommeau, de bouton évasé, etc., dont la conformation permet de préférence à l'utilisateur de soulever le sous-ensemble de couvercle par son intermédiaire. Avantageusement, comme illustré aux figures, l'organe de commande 11 est monté à pivotement relativement audit support 10 entre d'une part une position déployée (figure 1) qui forme ladite position de déverrouillage et dans laquelle ledit organe de commande 11 fait saillie verticalement, en l'espèce au droit du couvercle 3 vers l'extérieur, et d'autre part une position rétractée qui forme ladite position de verrouillage et dans laquelle ledit organe de commande 11 est rabaissé vers le couvercle 3. Dans sa position déployée, l'organe de commande 11 s'étend avantageusement selon une direction moyenne sensiblement parallèle audit axe vertical central X-X', tandis que dans sa position rétractée, il s'étend avantageusement selon une direction moyenne sensiblement perpendiculaire audit axe vertical central X-X', comme illustré aux figures.

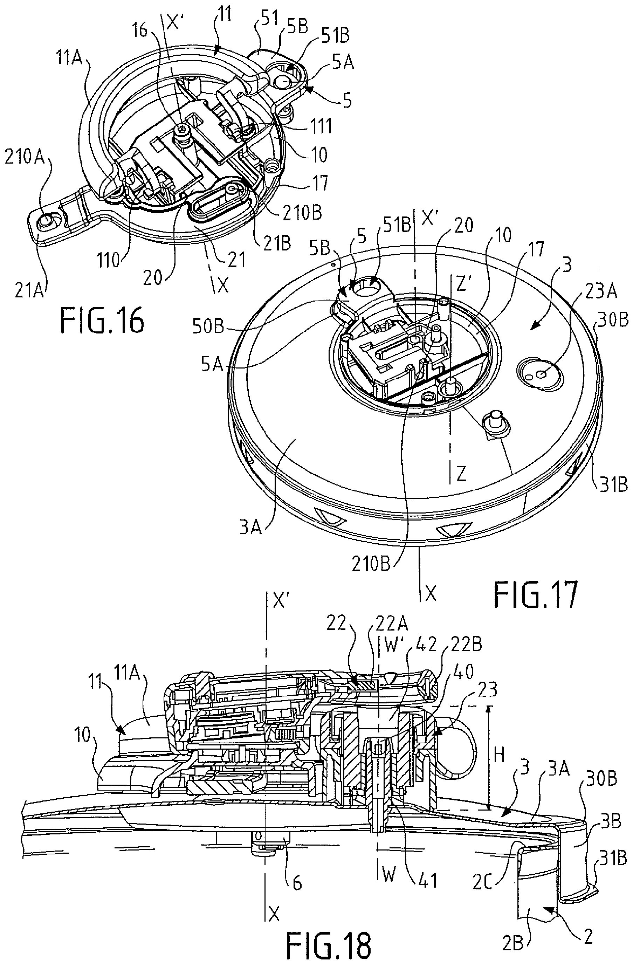

Avantageusement, les support 10 et cuve 2 sont conçus pour interagir, directement ou indirectement, dès lors que le sous-ensemble de couvercle en configuration de déverrouillage et la cuve 2 sont réunis selon ledit agencement relatif prédéterminé, afin de sensiblement empêcher le support 10 de pouvoir pivoter relativement à la cuve 2 (en l'espèce selon ledit axe vertical central X-X') lorsque l'organe de commande 11 est déplacé entre ses positions de verrouillage et de déverrouillage (ou inversement). En d'autres termes, la réunion du sous-ensemble de couvercle en configuration de déverrouillage et de la cuve 2 selon l'agencement relatif prédéterminé (agencement de pré-verrouillage) illustré à la figure 1 entraîne un inter-verrouillage du support 10 et de la cuve 2 empêchant en l'espèce le support 10 de tourner selon l'axe vertical central X-X' tout en reposant sur la cuve 2. Ce verrouillage de la position angulaire relative du support 10 et de la cuve 2 permet au support 10 de jouer le rôle d'un bâti fixe immobile relativement à la cuve 2 et par rapport auquel le couvercle 3 peut pivoter autour de l'axe vertical central X-X' selon une course angulaire prédéterminée pour passer d'un état déverrouillé (illustré à la figure 1) à un état verrouillé (illustré à la figure 16). Avantageusement, le support 10 déborde radialement du couvercle 3 de façon à pouvoir interagir avec la cuve 2 pour sensiblement immobiliser en rotation selon l'axe vertical le support 10 relativement à la cuve 2 lorsque le sous-ensemble de couvercle et la cuve 2 sont réunis selon ledit agencement relatif prédéterminé. De préférence, lesdits support 10 et cuve 2 sont pourvus respectivement de conformations de support 12, 13 et de cuve 14, 15 complémentaires destinées à coopérer par emboîtement lorsque le sous-ensemble de couvercle en configuration de verrouillage et la cuve 2 sont réunis selon ledit agencement relatif prédéterminé pour former l'enceinte de cuisson (figure 1). Ledit emboîtement des conformations complémentaires de support 12, 13 et de cuve 14, 15 permet de verrouiller la position angulaire relative du support 10 et de la cuve 2 dans un plan horizontal, perpendiculaire audit axe vertical central X-X'. Dans le mode de réalisation illustré aux figures, la cuve 2 est pourvue de deux conformations de cuve 14, 15 disposées de façon diamétralement opposée relativement à l'axe vertical central X-X' et fixées sur la face externe de la paroi latérale 2B de la cuve 2, tandis que le support 10 comporte deux conformations de support 12, 13 complémentaires disposées de façon diamétralement opposée sur le couvercle 3 relativement à l'axe vertical central X-X', lesdites conformations de support 12, 13 étant en l'espèce disposées en regard de la face extérieure de la ceinture annulaire 3B du couvercle 3. Il est cependant tout à fait envisageable, sans pour autant que l'on sorte du cadre de l'invention, que lesdits support 10 et cuve 2 soient pourvus respectivement d'une seule conformation de support et de cuve, ou même que les support 10 et cuve 2 soient pourvus, au lieu de conformations respectives de support et de cuve destinées à coopérer par emboîtement, d'éléments d'inter-verrouillage d'une autre nature reposant sur la mise en oeuvre d'une coopération de force (par friction, clipsage, engrènement, attraction magnétique...) suffisante pour verrouiller la position angulaire relative du support 10 et de la cuve 2. Avantageusement, chaque conformation de cuve 14, 15 forme un élément mâle tandis que chaque conformation de support 12, 13 forme un élément femelle complémentaire dudit élément mâle, ledit élément mâle étant avantageusement destiné à être inséré dans ledit élément femelle pour établir une liaison de blocage en rotation selon l'axe vertical central X-X' entre le support 10 et la cuve 2. Avantageusement, ladite conformation de cuve 14, 15 est portée par ladite poignée de cuve 2D, 2E. Ainsi, dans le mode de réalisation illustré aux figures, chaque poignée de cuve 2D, 2E, fixée de manière permanente à la paroi latérale 2B de la cuve 2, embarque une conformation de cuve 14, 15 respective, qui se présente par exemple sous la forme d'une nervure formant un élément mâle. Une encoche est avantageusement ménagée dans le bord inférieur libre de chacun desdits bords tombants 10A, 10B du support 10, pour former un élément femelle complémentaire de la nervure formant préférentiellement l'élément mâle.

Comme illustré aux figures, le sous-ensemble de couvercle comprend un premier dispositif 22 ainsi qu'un deuxième dispositif 23, ce dernier étant capable, à la condition que lesdits premier et deuxième dispositifs 22, 23 soient séparés d'une distance D n'excédant pas une valeur prédéterminée, d'exercer une influence sur le premier dispositif 22 pour que ledit dispositif 22 délivre en réponse un signal d'information et/ou de commande, par exemple de nature électrique. En d'autres termes, le sous-ensemble de couvercle embarque, à demeure ou de façon amovible, lesdits premier et deuxième dispositifs 22, 23, lesquels sont conçus pour interagir selon une liaison fonctionnelle prédéterminée dès qu'ils sont suffisamment proche l'un de l'autre, c'est-à-dire que dès que la distance D les séparant mutuellement est inférieure ou égale à un seuil correspondant à ladite valeur prédéterminée susvisée. Comme illustré aux figures, lesdits support 10 et couvercle 3 embarquent respectivement l'un et l'autre desdits premier et deuxième dispositifs 22, 23. Cela signifie que l'un quelconque desdits premier et deuxième dispositifs 22, 23 est solidaire du support 10, tandis que l'autre est solidaire du couvercle 3, de sorte que lesdits premier et deuxième dispositifs 22, 23 se déplacent l'un par rapport à l'autre lorsque le couvercle 3 se déplace relativement au support 10. Dans l'exemple illustré aux figures, le support 10 embarque le premier dispositif 22, tandis que le couvercle 3 embarque le deuxième dispositif 23. Il est cependant tout à fait envisageable, sans pourtant que l'on sorte du cadre de l'invention, que le support 10 embarque plutôt le deuxième dispositif 23 et que le couvercle 3 embarque alors le premier dispositif 22. Conformément à l'invention, lesdits support 10 et couvercle 3 embarquent respectivement l'un et l'autre desdits premier et deuxième dispositifs 22, 23 pour que lorsque ledit sous-ensemble de couvercle se trouve en configuration de verrouillage (illustré à la figure 8), lesdits premier et deuxième dispositifs 22, 23 soient séparés d'une distance D qui n'excède pas ladite valeur prédéterminée, et pour que lorsque ledit sous-ensemble de couvercle se trouve en configuration de déverrouillage (illustré à la figure 6) lesdits premier et deuxième dispositifs 22, 23 soient cette fois au contraire séparés d'une distance D qui excède ladite valeur prédéterminée. En d'autres termes, la distance D séparant lesdits premier et deuxième dispositifs 22, 23 varie entre une première valeur qui n'excède pas ladite valeur prédéterminée (figures 7 et 8) et une deuxième valeur qui excède ladite valeur prédéterminée (figures 1 et 3).

Ainsi, l'invention repose sur l'idée d'utiliser un mouvement relatif du couvercle 3 et du support 10 pour faire passer un premier dispositif 22, qui est par exemple solidaire du support 10, d'un premier état désactivé ou inactivable à un deuxième état activé ou activable, par simple rapprochement dudit premier dispositif 22 avec un deuxième dispositif 23 qui joue avantageusement le rôle d'élément activateur ou excitateur. Ce changement d'état du premier dispositif en réponse à l'influence exercée par le deuxième dispositif 23, rendu possible par le rapprochement desdits premier et deuxième dispositifs 22, 23, est utilisé pour entraîner la délivrance, par le premier dispositif 22, d'un signal, c'est-à-dire d'un phénomène physique de quelque nature que ce soit (électrique, électromagnétique, sonore, lumineux...) porteur d'une information, afin d'utiliser cette information soit directement pour informer l'utilisateur, soit pour commander le fonctionnement de l'appareil 1 lui-même ou d'un dispositif extérieur (plaque de cuisson, terminal informatique tel qu'un ordiphone ou une tablette tactile...). Conformément à l'invention, lorsque le sous-ensemble de couvercle se trouve en configuration de verrouillage, le deuxième dispositif 23 se retrouve positionné relativement au premier dispositif 22 de façon soit à exercer immédiatement une influence sur le premier dispositif 22 pour que ce dernier délivre en réponse ledit signal d'information et/ou de commande, soit pour pouvoir exercer ladite influence à un moment ultérieur, par exemple lorsque d'autres conditions (telle que l'atteinte d'une valeur prédéterminée de pression au sein de l'enceinte de cuisson) seront réunies. L'invention utilise donc le déplacement du couvercle 3 relativement au support 10 pour élaborer, au moyen du premier dispositif 22, un signal exploitable, soit directement (s'il s'agit par exemple d'un signal lumineux ou sonore d'information) soit indirectement (s'il s'agit par exemple d'un signal électrique destiné à faire l'objet d'un traitement pour l'exploiter à des fins d'information ou de commande).

Dans l'exemple illustré aux figures, le premier dispositif 22 est porté par le support 10, c'est-à-dire qu'il est attaché sur et contre ledit support 10, tandis que ledit deuxième dispositif 23 est porté par ledit couvercle 3, de sorte que ledit deuxième dispositif 23 est directement attaché à la face externe dudit couvercle 3, par exemple sur l'élément de couverture discoïde 3A. De préférence, le premier dispositif 22 est formé par un module indépendant 24 (illustré séparément à la figure 2) conçu pour être attaché de façon amovible audit support 10, de sorte qu'un utilisateur de l'appareil 1 peut à volonté, et de préférence sans outil autre que ses seules mains, attacher ledit module indépendant 24 audit support 10 et le détacher de ce dernier. À cette fin, lesdits module indépendant 24 et support 10 sont pourvus de moyens d'attaches complémentaires 25, 26 respectifs conçus pour coopérer afin d'attacher de façon amovible le module indépendant 24 au support 10. Cette coopération peut être de toute nature. Par exemple, les moyens d'attache complémentaires 25, 26 peuvent être conçus pour coopérer par attraction magnétique (ce qui constitue d'ailleurs une invention distincte et indépendante en tant que telle), auquel cas le moyen d'attache 26 associé au support 10 est par exemple formé par un aimant tandis que le module indépendant 24 embarque une substance ferromagnétique capable d'être attirée par l'aimant en question. De façon préférentielle, la coopération entre les moyens d'attache complémentaires 25, 26 est de nature mécanique, comme dans l'exemple illustré aux figures, où le module indépendant 24 est conçu pour être fixé sur le support 10 par clipsage, c'est-à-dire par emboîtement à force d'un élément mâle formant en l'espèce le moyen d'attache 26 du support et un élément femelle formant en l'espèce le moyen d'attache 25 du module indépendant 24 (ou inversement). Les moyens d'attache complémentaires 25, 26 sont avantageusement conçus pour immobiliser complètement le premier dispositif 22 sur le support 10, c'est-à-dire qu'ils sont conçus pour réaliser une liaison d'encastrement entre le support 10 et le premier dispositif 22. Il est cependant tout à fait envisageable que le premier dispositif 22 soit fixé au support 10 avec une faculté de mobilité, et/ou qu'il soit attaché de manière permanente, inamovible, au support 10.

Avantageusement, l'appareil 1 comprend au moins une unité de traitement conçue pour exploiter le signal d'information et/ou de commande, afin d'élaborer, à partir dudit signal qui est de préférence de nature électrique comme évoqué précédemment, une information intelligible par un utilisateur et/ou une instruction de commande pour contrôler le fonctionnement de l'appareil 1 lui-même ou d'un dispositif externe comme évoqué précédemment. Dans le mode de réalisation illustré aux figures, ladite unité de traitement est avantageusement intégrée dans le module indépendant 24. Il est cependant tout à fait envisageable que l'unité de traitement soit distincte dudit module indépendant 24, voire même qu'elle soit totalement déportée de l'appareil 1, auquel cas le premier dispositif 22 est avantageusement conçu pour communiquer, via une liaison filaire ou sans fil (par ondes radio par exemple) avec l'unité de traitement. Dans un mode de réalisation préférentiel, l'appareil 1 comprend plusieurs unités de traitement dont l'une est embarquée par le module indépendant 24 et l'autre embarquée par un dispositif externe formé avantageusement par un ordiphone capable de communiquer, par exemple par une liaison Bluetooth ®, avec le module indépendant 24. Dans le mode de réalisation illustré aux figures, l'unité de traitement est conçue pour exploiter ledit signal d'information et/ou de commande afin d'élaborer une information, l'appareil 1 comprenant également un moyen d'affichage 27, comme par exemple un écran (par exemple un écran LCD, tactile ou non), un afficheur ou un cadran, qui est relié à ladite unité traitement par une liaison fonctionnelle appropriée, filaire ou non, pour afficher ladite information et la rendre ainsi accessible et intelligible à l'utilisateur de l'appareil 1. L'invention n'est toutefois absolument pas limitée à la mise en oeuvre d'un module indépendant 24 équipé d'un moyen d'affichage 27, et il est par exemple tout à fait envisageable, sans pour autant que l'on sorte du cadre de l'invention, que le module indépendant 24 soit dépourvu de tout moyen d'affichage, ce dernier étant déporté sur un terminal externe indépendant (et par exemple formé par l'écran d'un ordiphone) qui communique par une liaison sans fil avec le module indépendant 24.

Avantageusement, ledit premier dispositif 22 inclut un capteur 22A conçu pour élaborer ledit signal d'information et/ou de commande à partir d'une valeur de grandeur physique que la distance D entre lesdits premier et deuxième dispositifs 22, 23 est susceptible de faire varier. Plus précisément, le capteur 22A est conçu pour mesurer une grandeur physique dans une zone de l'espace prédéterminée, correspondant de préférence à la position du capteur 22A en question. Lorsque la distance D entre lesdits premier et deuxième dispositifs 22, 23 excède ladite valeur prédéterminée, le deuxième dispositif 23 est trop éloigné du capteur 22A pour que la grandeur physique mesurée par ledit capteur puisse varier significativement. À l'inverse, lorsque les premier et deuxième dispositifs 22, 23 sont rapprochés au point que la distance D qui les séparent n'excède pas ladite valeur prédéterminée, le deuxième dispositif 23 est alors capable de faire varier ladite grandeur physique de façon suffisamment significative dans la zone de détection du capteur 22A pour que ce dernier soit capable d'élaborer ledit signal d'information et/ou de commande.

De préférence, ledit capteur 22A est un capteur de température, tandis que ledit deuxième dispositif 23 comprend un orifice 23A ménagé à travers le couvercle 3 afin de permettre au capteur de température 22A de pouvoir accéder, lorsque ledit sous-ensemble de couvercle se trouve en configuration de verrouillage, à la température régnant au sein de l'appareil 1, ou à une image de cette dernière. Cela signifie donc que, selon ce mode de réalisation préférentiel, le capteur de température 22A est conçu pour élaborer ledit signal d'information et/ou de commande à partir d'une valeur de température que la distance entre le capteur 22A et l'orifice 23A ménagé à travers le couvercle 3 est susceptible de faire varier. Ainsi, lorsque le sous-ensemble de couvercle se trouve en configuration de déverrouillage, le capteur de température 22A est trop éloigné de l'orifice 23A pour que la valeur de température mesurée par le capteur 22A puisse être influencée, même temporairement, de façon significative. Au contraire, lorsque le sous-ensemble de couvercle se trouve en configuration de verrouillage, le capteur 22A est suffisamment proche de l'orifice 23A pour que la valeur de température qu'il mesure soit directement fonction de la température régnant dans l'appareil 1, c'est-à-dire régnant au sein de l'enceinte de cuisson formée par le couvercle 3 et la cuve 2.

Avantageusement, ledit deuxième dispositif 23 forme un organe de régulation de pression 4 conçu pour empêcher que la pression régnant au sein de l'appareil 1 excède une valeur de consigne prédéterminée, dite « *pression de fonctionnement* », laquelle excède la pression atmosphérique d'une valeur qui est comprise par exemple entre sensiblement 10 et 120 kPa, et qui est de préférence de l'ordre de 100 kPa. Le principe de fonctionnement général d'un tel moyen de régulation de pression est bien connu en tant que tel. Avantageusement, ledit organe de régulation de pression inclut une soupape associée audit orifice 23A ménagé à travers le couvercle 3, ladite soupape incluant elle-même un obturateur 40 mobile entre une position de fermeture, dans laquelle il empêche la vapeur contenue au sein de l'appareil 1 de s'échapper hors de l'appareil 1, c'est-à-dire en l'espèce hors de l'enceinte de cuisson, par l'orifice 23 A, et une position d'ouverture, dans laquelle il autorise la vapeur contenue au sein de l'appareil 1 à s'échapper hors de ce dernier par l'orifice 23A et selon une trajectoire d'échappement prédéterminée. Par exemple, comme illustré aux figures, la soupape formant en l'espèce l'organe de régulation de pression 4 comprend un siège de soupape 41 qui se présente sous la forme d'un conduit sensiblement tubulaire abouché à l'orifice 23A et s'élevant sensiblement verticalement, selon un axe W-W', jusqu'à une extrémité supérieure libre que l'obturateur 40 vient obturer ou libérer en fonction du niveau de pression régnant au sein de l'enceinte de cuisson. Par exemple, la soupape formant l'organe de régulation de pression 4 inclut un moyen de rappel conçu pour exercer une force de rappel sur l'obturateur 40, afin de maintenir ce dernier dans sa position de fermeture tant que le niveau de pression régnant au sein de l'enceinte de cuisson est inférieur ou égal à un niveau prédéterminé P0, correspondant à la pression de fonctionnement. Le moyen de rappel est conçu pour que dès que la pression régnant au sein de l'enceinte de cuisson excède la pression de fonctionnement P0, la vapeur exerce sur l'obturateur 40 une force motrice qui est suffisante pour surmonter la force de rappel et écarter l'obturateur 40 du siège 41, pour permettre à la vapeur contenue dans l'enceinte de cuisson de s'échapper par l'orifice 23A puis le siège 41 à l'extérieur. La force de rappel en question peut être par exemple exercée par un ressort ou tout simplement par le poids de l'obturateur 40. De préférence, ladite soupape est pourvue d'un organe de canalisation de la vapeur conçu pour impartir à la vapeur s'échappant hors de l'appareil une trajectoire d'échappement sensiblement verticale, de bas en haut. Dans l'exemple illustré aux figures, l'organe de canalisation en question est formé par le siège 41, par lequel s'échappe la vapeur selon une trajectoire verticale ascendante, parallèlement à l'axe W-W' (lui-même parallèle à l'axe vertical central X-X') lorsque l'obturateur 40 est repoussé dans sa position d'ouverture.

Avantageusement, ledit capteur 22A de température est conçu pour se trouver sur ladite trajectoire d'échappement de la vapeur, lorsque ledit sous-ensemble de couvercle se trouve en configuration de verrouillage, pour déterminer la température de la vapeur à sa sortie de l'appareil 1. Ainsi, dans le mode de réalisation illustré aux figures, le capteur de température 22A est destiné à venir surplomber ladite soupape formant l'organe de régulation de pression 4, lorsque ledit sous-ensemble de couvercle se trouve en configuration de verrouillage, de sorte que le capteur de température 22A se trouve alors sur l'axe W-W' de symétrie du siège 41, à la verticale et au-dessus de l'orifice 23A du siège 41. Au contraire, lorsque le sous-ensemble de couvercle se trouve en configuration de déverrouillage (cf. figure 3), le capteur 22A de température est décalé angulairement relativement audit axe W-W', de sorte qu'il ne croise sensiblement pas la trajectoire d'échappement de la vapeur et n'est donc alors pas en mesure de déterminer de façon fiable la température de la vapeur à la sortie de la soupape. De préférence, afin d'améliorer encore la fiabilité de la mesure, l'organe de canalisation de la vapeur comporte non seulement ledit siège 41, à l'amont de l'obturateur mobile 40, mais également un organe canalisateur aval 42, qui présente sensiblement une forme tubulaire et s'étend sensiblement vers le haut à partir de l'extrémité supérieure du siège 41. Ainsi, lorsque le sous-ensemble de couvercle se trouve en configuration de verrouillage, le capteur 22A de température se trouve lui-même parfaitement positionné pour détecter au mieux toute variation de température qui serait due à un échappement de vapeur par la soupape.

Avantageusement, l'appareil 1 comprend un minuteur relié fonctionnellement audit capteur de température 22A, lequel est conçu pour détecter une élévation de température consécutive à un échappement de vapeur résultant du passage de l'obturateur 40 en position d'ouverture, et pour émettre en retour un signal de déclenchement dudit minuteur. Ainsi, l'information de température récoltée par le capteur 22A est avantageusement utilisée par ladite unité de traitement pour déclencher le décompte d'une durée de cuisson par un minuteur relié fonctionnellement au capteur 22A. L'unité de traitement est par exemple conçue pour détecter la variation significative de température résultant de l'échappement du tout premier jet de vapeur lorsque la pression prédéterminée P0 vient d'être dépassée pour la première fois, afin de déclencher à cet instant le décompte de la durée de cuisson par le minuteur, conformément par exemple à l'enseignement du document EP-1 458 268, dont le contenu est incorporé par référence. Le minuteur en question est avantageusement embarqué dans le module indépendant 24, lequel est pourvu de moyens de commande (par exemple des boutons) permettant à un utilisateur de régler la durée de cuisson décomptée par le minuteur à la valeur de son choix, l'écran 27 pouvant afficher la valeur en question puis le décompte de cette valeur le moment venu.

Afin de ne pas perturber la mesure de température par le capteur 22A, ladite soupape formant l'organe de régulation de pression 4 présente avantageusement, selon la direction verticale W-W', une hauteur hors-tout H sensiblement invariable, afin de ne pas modifier la distance séparant verticalement le sommet de la soupape (correspondant en l'espèce au sommet de l'organe canalisateur aval 42) du capteur 22A, lorsque le sous-ensemble de couvercle se trouve en configuration de verrouillage. Afin d'améliorer encore la précision de mesure de température, le premier dispositif 22 comprend avantageusement un élément annulaire 22B délimitant un espace intérieur 22C (cf. figure 2) qui est entouré par ledit élément annulaire 22B et qui accueille ledit capteur de température 22A, afin de protéger ce dernier d'éventuels courants d'air qui pourraient perturber la mesure, et de limiter la déperdition latérale de vapeur. L'élément annulaire 22B permet également de protéger le capteur de température 22B contre d'éventuels chocs (en cas de chute par exemple). L'élément annulaire 22B forme ainsi avantageusement une boucle qui s'étend sensiblement selon un plan moyen horizontal perpendiculaire à l'axe vertical central X-X', le capteur 22A formant une excroissance qui s'étend vers l'intérieur de ladite boucle jusqu'au centre de cette dernière, de sorte que la partie active dudit capteur 22A se retrouve sensiblement au centre de ladite boucle formée par l'élément annulaire 22B. Comme illustré aux figures, lorsque le sous-ensemble de couvercle se trouve en configuration de verrouillage, l'axe W-W' de symétrie de l'orifice 23A passe par ledit centre de ladite boucle, et donc par le capteur 22A, et plus précisément par la partie active de ce dernier.

Avantageusement, comme illustré aux figures, le premier dispositif 22 comprend un corps principal 220 (cf. figure 2) qui porte lesdits capteur de température 22A et élément annulaire 22B de façon qu'ils fassent saillie latéralement dudit corps principal 220, en porte-à-faux, pour surplomber le couvercle 3. Dans ce mode de réalisation préférentiel, le corps principal 220 accueille un moyen d'affichage 27 (par exemple un écran LCD sur sa face supérieure) ainsi qu'un minuteur paramétrable au moyen de boutons de commande portés eux aussi par le corps principal 220. Un module indépendant 24 comprenant un capteur de température 22A ainsi qu'un élément annulaire 22B délimitant un espace intérieur 22C qui est entouré par ledit élément annulaire 22B et qui accueille ledit capteur de température 22A, comme illustré à la figure 2 par exemple, constitue d'ailleurs en tant que tel une invention indépendante.

Bien entendu, l'invention n'est pas limitée à la mise en oeuvre d'un capteur 22A qui est un capteur de température. Alternativement, le capteur 22A peut être par exemple un capteur magnétique, auquel cas le deuxième dispositif 23 incorpore avantageusement un élément magnétique conçu pour exciter le capteur magnétique en question lorsque la distance D séparant lesdits premier et deuxième dispositifs 22, 23 n'excède pas ladite valeur prédéterminée, pour que ledit capteur 22A élabore en réponse ledit signal d'information et/ou de commande. Dans ce cas, le premier et le deuxième dispositif 22, 23 sont conçus pour interagir magnétiquement lorsque le sous-ensemble de couvercle se trouve en configuration de verrouillage, cette interaction magnétique étant avantageusement une interaction à distance. Par exemple, le capteur 22A peut être constitué dans ce cas par un capteur magnéto-résistif, par exemple de type C-MOS, tandis que l'élément magnétique comprend un aimant, par exemple un aimant permanent. Il est également possible, dans un mode de réalisation alternatif, que le capteur 22A soit un capteur à contact, auquel cas ledit deuxième dispositif 23 incorpore avantageusement un actionneur destiné à venir en contact avec ledit capteur 22A, lorsque le sous-ensemble de couvercle se trouve en configuration de verrouillage, afin d'actionner ledit capteur 22A, en venant en l'espèce au contact de ce dernier, pour que ledit capteur 22A élabore en réponse ledit signal d'information et/ou de commande. Dans ce mode de réalisation alternatif, le premier dispositif 22 est par exemple pourvu d'un interrupteur formant le capteur 22A, ledit deuxième dispositif 23 étant conçu pour venir presser ledit interrupteur lorsque le sous-ensemble de couvercle passe en configuration de verrouillage, afin de faire ainsi passer l'interrupteur en question d'un état désactivé à un état activé. En définitive, l'invention n'est absolument pas limitée à une interaction spécifique entre lesdits premier et deuxième dispositifs 22, 23, cette interaction pouvant être électrique, thermique, optique, magnétique... l'essentiel étant que le mouvement du couvercle 3 relativement au support 10 soit utilisé pour obtenir un signal d'information et/ou de commande.

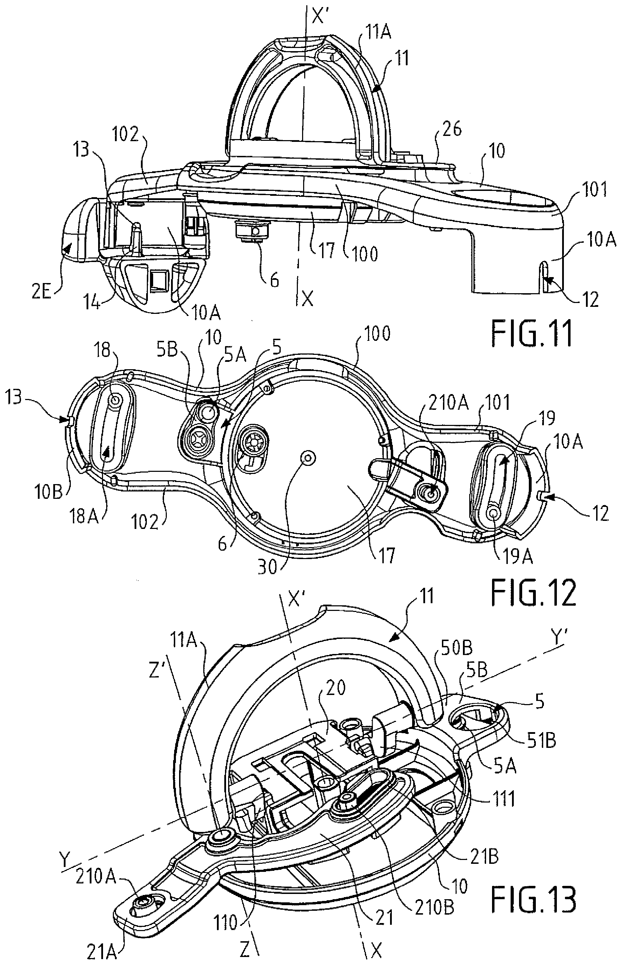

De préférence, l'appareil 1 comporte un moyen de sécurité à l'ouverture 5 distinct desdits premier et deuxième dispositifs et susceptible d'évoluer, sous l'effet du niveau de pression régnant dans l'appareil 1, entre une configuration de libération, dans laquelle il autorise le déverrouillage du couvercle 3 relativement à la cuve 2, et une position de blocage, dans laquelle il interdit le déverrouillage du couvercle 3 relativement à la cuve 2. À cette fin, ledit moyen de sécurité 5 comprend avantageusement un élément mobile 5A monté à coulissement sur le couvercle 3, et en l'espèce à coulissement vertical selon une direction de coulissement parallèle à l'axe vertical central X-X', entre une position haute (de butée) dans laquelle il est capable de coopérer avec un élément complémentaire de blocage 5B porté par le support 10, afin de bloquer le déplacement du couvercle 3 relativement au support 10, et une position basse (de butée) dans laquelle il n'interfère pas avec l'élément complémentaire 5B, autorisant ainsi le déplacement du couvercle 3 relativement au support 10. Comme cela ressort en particulier de la figure 12, l'élément mobile 5A est formé avantageusement par un doigt destiné à coulisser verticalement au sein d'un tube abouché à un orifice de fuite ménagé à travers le couvercle 3, de façon qu'en position haute le doigt vienne obturer hermétiquement l'orifice de fuite, alors qu'en position basse la vapeur est autorisée à fuir par l'orifice en question. L'élément complémentaire 5B est quant à lui de préférence formé par une pièce présentant une surface d'arrêt 50B et un orifice de passage 51B. Tant que le couvercle se trouve dans sa position de déverrouillage relativement au support 10, la surface de blocage 50B se trouve au droit de l'élément mobile 5A, sur la trajectoire de coulissement de ce dernier, afin de l'empêcher d'atteindre sa position haute et maintenir ainsi une mise en communication de l'intérieur de l'enceinte de cuisson avec l'extérieur, empêchant toute montée en pression significative de l'enceinte. Au contraire, lorsque le couvercle 3 atteint sa position de verrouillage, par pivotement relativement au support 10 selon la course angulaire prédéterminée évoquée précédemment, l'élément mobile 5 se retrouve alors au droit de l'ouverture 51B, ce qui autorise l'élément mobile 5A à atteindre, sous l'effet de la force motrice exercée par la montée en pression au sein de l'enceinte de cuisson, sa position haute d'étanchéité. Une fois en position haute, l'élément mobile 5A est entouré par les bords de l'orifice 51B, ce qui empêche tout pivotement du couvercle 3 relativement au support 10 dans le sens du déverrouillage.

Le fonctionnement de l'appareil de cuisson 1 illustré aux figures va maintenant être décrit brièvement. L'utilisateur remplit tout d'abord la cuve 2 illustrée à la figure 4 d'aliments à cuire, en positionnant éventuellement les aliments à distance du fond de la cuve 2, dans un panier de cuisson ajouré. L'utilisateur saisit ensuite le sous-ensemble de couvercle (illustré à la figure 5) par l'anse 11A pour soulever ledit sous-ensemble en vue de le rapporter sur la cuve 2 afin de fermer cette dernière. L'utilisateur réunit ainsi le sous-ensemble de couvercle en configuration de déverrouillage et la cuve 2 selon l'agencement relatif prédéterminé illustré notamment à la figure 1. Dans cette configuration, le capteur de température 22A et l'axe W-W' de la soupape sont décalés angulairement, comme illustré à la figure 3. Dans cet agencement, le capteur 22A n'est pas capable de détecter correctement la variation de température correspondant à l'échappement des premières fumerolles de vapeur lorsque la pression de consigne P0 est atteinte. Puis l'utilisateur rabat l'anse 11A selon une course angulaire β d'environ 90°, jusqu'à atteindre une position rabattue de butée illustrée notamment aux figures 7 et 8. Ce déplacement de l'anse 11A de sa position déployée à sa position rabattue entraîne le pivotement du couvercle 3 relativement au support 10 d'un angle α d'environ 15°, permettant aux rampes de couvercle de venir en correspondance sous les rampes de cuve selon une configuration de verrouillage permettant la montée en pression. Le pivotement du couvercle 3 relativement au support 10 entraîne concomitamment le déplacement de la soupape relativement au support 10 et au capteur 22A, de façon à amener ladite soupape sous ledit capteur 22A, ce dernier se retrouvant alors sur la trajectoire d'échappement de la vapeur. Le cycle de cuisson peut alors débuter. Dès que la pression régnant au sein de l'enceinte de cuisson atteint la valeur de consigne P0, la vapeur s'échappe une première fois par le conduit de sortie de la soupape, formé par le siège 41 et l'organe canalisateur aval 42, venant ainsi balayer le capteur 22A qui détecte alors cette brusque élévation de température et délivre en retour un signal de commande du minuteur embarqué dans le module indépendant 24, lequel porte en l'espèce également le capteur de température 22A. A l'issue du cycle de cuisson, et une fois la pression régnant au sein de l'enceinte retombée à un niveau prédéterminé de sécurité, l'utilisateur n'a plus qu'à relever l'anse 11A pour faire pivoter le couvercle 3 relativement au support 10 en sens inverse et désengager ainsi les rampes de cuve et de couvercle, permettant la séparation du couvercle 3 et de la cuve 2.

## Revendications

1. Appareil (1) de cuisson d'aliments sous pression comportant une cuve (2), un couvercle (3), ainsi qu'un système de verrouillage, ledit appareil étant **caractérisé en ce qu'**il comprend un sous-ensemble de couvercle qui inclut à la fois ledit couvercle (3) et un support (10) attaché audit couvercle (3) de façon que ce dernier puisse se déplacer relativement audit support (10) entre deux positions correspondant respectivement à une configuration de déverrouillage et une configuration de verrouillage dudit sous-ensemble de couvercle, le sous-ensemble de couvercle et la cuve (2) étant conçus pour être réunis selon au moins un agencement relatif prédéterminé permettant audit système de verrouillage de verrouiller le couvercle (3) à la cuve (2) par déplacement du couvercle (3) relativement au support (10) afin de faire passer le sous-ensemble de couvercle de sa configuration de déverrouillage à sa configuration de verrouillage, ledit sous-ensemble de couvercle comprenant un premier dispositif (22) ainsi qu'un deuxième dispositif (23) qui est capable, à la condition que lesdits premier et deuxième dispositifs (22, 23) soient séparés d'une distance (D) n'excédant pas une valeur prédéterminée, d'exercer une influence sur le premier dispositif (22) pour que ce dernier délivre en réponse un signal d'information et/ou de commande, lesdits support (10) et couvercle (3) embarquant respectivement l'un et l'autre desdits premier et deuxième dispositifs (22, 23) pour que lorsque ledit sous-ensemble de couvercle se trouve en configuration de verrouillage lesdits premier et deuxième dispositifs (22, 23) soient séparés d'une distance (D) qui n'excède pas ladite valeur prédéterminée, et pour que lorsque ledit sous-ensemble de couvercle se trouve en configuration de déverrouillage lesdits premier et deuxième dispositifs (22, 23) soient séparés d'une distance (D) qui excède ladite valeur prédéterminée.

2. Appareil (1) selon la revendication 1 **caractérisé en ce que** ledit premier dispositif (22) est porté par ledit support (10) tandis que ledit deuxième dispositif (23) est porté par ledit couvercle (3).

3. Appareil (1) selon la revendication 2 **caractérisé en ce que** ledit premier dispositif (22) est formé par un module indépendant (24) conçu pour être attaché de façon amovible audit support (10), lesdits module indépendant (24) et support (10) étant de préférence pourvus de moyens d'attache complémentaires (25, 26) respectifs conçus pour coopérer par attraction magnétique afin d'attacher de façon amovible ledit module indépendant (24) au support (10).

4. Appareil (1) selon l'une des revendications 1 à 3 **caractérisé en ce que** ledit premier dispositif (22) inclut un capteur (22A) conçu pour élaborer ledit signal d'information et/ou de commande à partir d'une valeur de grandeur physique que la distance (D) entre lesdits premier et deuxième dispositifs (22, 23) est susceptible de faire varier.

5. Appareil (1) selon la revendication 4 **caractérisé en ce que** ledit capteur (22A) est :
- soit un capteur magnétique, auquel cas ledit deuxième dispositif (23) incorpore un élément magnétique conçu pour exciter le capteur (22A) lorsque la distance séparant lesdits premier et deuxième dispositifs (22, 23) n'excède pas ladite valeur prédéterminée pour que ledit capteur (22A) élabore en réponse ledit signal d'information et/ou de commande,
- soit un capteur à contact, auquel cas ledit deuxième dispositif (23) incorpore un actionneur destiné à venir en contact avec ledit capteur (22A), lorsque ledit sous-ensemble de couvercle se trouve en configuration de verrouillage, afin d'actionner ledit capteur (22A) pour que ce dernier élabore en réponse ledit signal d'information et/ou de commande,

6. Appareil (1) selon la revendication 4 **caractérisé en ce que** ledit capteur (22A) est un capteur de température tandis que ledit deuxième dispositif (23) comprend un orifice (23A) ménagé à travers le couvercle (3) afin de permettre au capteur de température (22A) de pouvoir accéder, lorsque ledit sous-ensemble de couvercle se trouve en configuration de verrouillage, à la température régnant au sein de l'appareil (1) ou à une image de cette dernière.

7. Appareil (1) selon la revendication 6 **caractérisé en ce que** ledit deuxième dispositif (23) forme un organe de régulation de pression (4) conçu pour empêcher que la pression régnant au sein de l'appareil excède une valeur de consigne prédéterminée.

8. Appareil (1) selon la revendication 7 **caractérisé en ce que** ledit organe de régulation de pression (4) inclut une soupape associée audit orifice (23A) ménagé à travers le couvercle (3), ladite soupape incluant elle-même un obturateur (40) mobile entre une position de fermeture dans laquelle il empêche la vapeur contenue au sein de l'appareil (1) de s'échapper hors de l'appareil (1) par l'orifice (23A) et une position d'ouverture dans laquelle il autorise la vapeur contenue au sein de l'appareil (1) à s'échapper hors de ce dernier par l'orifice (23A) et selon une trajectoire d'échappement prédéterminée, ledit capteur (22A) de température étant conçu pour se trouver sur ladite trajectoire d'échappement, lorsque ledit sous-ensemble de couvercle se trouve en configuration de verrouillage, pour déterminer la température de la vapeur à sa sortie de l'appareil (1), ladite soupape étant préférentiellement pourvue d'un organe de canalisation de la vapeur conçu pour impartir à la vapeur s'échappant hors de l'appareil (1) une trajectoire d'échappement sensiblement verticale, de bas en haut, ledit capteur de température (22A) étant de préférence destiné à venir surplomber ladite soupape lorsque ledit sous-ensemble de couvercle se trouve en configuration de verrouillage.

9. Appareil (1) selon la revendication 8 **caractérisé en ce que** ladite soupape présente, selon la direction verticale (W-W'), une hauteur hors-tout (H) sensiblement invariable.

10. Appareil (1) selon l'une des revendications 6 à 9 **caractérisé en ce que** ledit premier dispositif (22) comprend un élément annulaire (22B) délimitant un espace intérieur (22C) qui est entouré par ledit élément annulaire (22B) et qui accueille ledit capteur de température (22A), ledit premier dispositif (22) comprenant de préférence un corps principal (220) qui porte lesdits capteur de température (22A) et élément annulaire (22B) de façon qu'ils fassent préférentiellement saillie latéralement dudit corps principal (220), en porte-à-faux, pour surplomber le couvercle (3).

11. Appareil (1) selon l'une des revendications 1 à 10 **caractérisé en ce que** ledit système de verrouillage est un système de verrouillage à baïonnette, ledit support (10) étant attaché audit couvercle (3) de façon que ce dernier puisse pivoter relativement audit support (10) entre lesdites deux positions selon un axe vertical central (X-X'), ledit agencement relatif prédéterminé permettant audit système de verrouillage à baïonnette de verrouiller le couvercle (3) à la cuve (2) par pivotement du couvercle (3) relativement au support (10) selon ledit axe vertical central (X-X').

12. Appareil (1) selon la revendication 11 **caractérisé en ce qu'**il comprend un organe de commande (11) du verrouillage/déverrouillage attaché audit support (10) de façon à pouvoir être déplacé manuellement relativement à ce dernier entre des positions de verrouillage et déverrouillage, ledit appareil (1) comprenant un dispositif de transformation du déplacement de l'organe de commande (1) en pivotement du couvercle (3) relativement au support (10) selon ledit axe vertical central (X-X').

13. Appareil de cuisson (1) d'aliments sous pression selon la revendication 12 **caractérisé en ce que** ledit organe de commande (11) est monté à pivotement relativement audit support (10) selon un axe radial de pivotement (Y-Y') qui est perpendiculaire audit axe vertical central (X-X'), ledit organe de commande (11) comprenant de préférence une anse (11A).

14. Appareil (1) de cuisson d'aliments sous pression selon l'une quelconque des revendications 12 et 13 **caractérisé en ce que** lesdits support (10) et cuve (2) sont conçus pour interagir, dès lors que le sous-ensemble de couvercle en configuration de déverrouillage et la cuve (2) sont réunis selon ledit agencement relatif prédéterminé, afin de sensiblement empêcher ledit support (10) de pouvoir pivoter relativement à la cuve (2) lorsque l'organe de commande (11) est déplacé entre ses positions de déverrouillage et de verrouillage.

15. Appareil (1) de cuisson d'aliments sous pression selon l'une des revendications 1 à 14 **caractérisé en ce qu'**il comporte un moyen de sécurité à l'ouverture (5) distinct desdits premier et deuxième dispositifs et susceptible d'évoluer, sous l'effet du niveau de pression régnant dans l'appareil, entre une configuration de libération, dans laquelle il autorise le déverrouillage du couvercle (3) relativement à la cuve (2), et une position de blocage, dans laquelle il interdit le déverrouillage du couvercle (3) relativement à la cuve (2), ledit moyen de sécurité (5) comprenant de préférence un élément mobile (5A) monté à coulissement sur le couvercle (3) entre une position haute dans laquelle il est capable de coopérer avec un élément complémentaire de blocage (5B) porté par le support (10), afin de bloquer le déplacement du couvercle (3) relativement au support (10), et une position basse dans laquelle il n'interfère pas avec l'élément complémentaire autorisant ainsi le déplacement du couvercle (3) relativement au support (10).

## Patentansprüche

1. Gerät (1) zum Garen von Nahrungsmitteln unter Druck, umfassend einen Behälter (2), einen Deckel (3) sowie ein Verriegelungssystem, wobei das genannte Gerät **dadurch gekennzeichnet ist, dass** es eine Deckel-Untereinheit umfasst, die gleichzeitig den Deckel (3) und einen Träger (10) enthält, der an dem Deckel (3) derart befestigt ist, dass sich Letzterer relativ zum Träger (10) zwischen zwei Positionen verschieben kann, die jeweils einer Entriegelungskonfiguration und einer Verriegelungskonfiguration der genannten Deckel-Untereinheit entsprechen, wobei die Deckel-Untereinheit und der Behälter (2) gestaltet sind, um gemäß wenigstens einer vorbestimmten relativen Anordnung vereint zu sein, die dem Verriegelungssystem das Verriegeln des Deckels (3) am Behälter (2) per Verschieben des Deckels (3) relativ zum Träger (10) erlaubt, um die Deckel-Untereinheit von ihrer Entriegelungskonfiguration in ihre Verriegelungskonfiguration übergehen zu lassen, wobei die Deckel-Untereinheit eine erste Vorrichtung (22) sowie eine zweite Vorrichtung (23) umfasst, die unter der Bedingung, dass die erste und zweite Vorrichtung (22, 23) um einen Abstand (D) getrennt sind, der einen vorbestimmten Wert nicht überschreitet, in der Lage ist, einen Einfluss auf die erste Vorrichtung (22) auszuüben, damit diese Letztere als Antwort ein Informations- und/oder ein Steuersignal ausgibt, wobei der Träger (10) und der Deckel (3) jeweils jeder die erste und zweite Vorrichtung (22, 23) aufnehmen, damit, wenn die Deckel-Untereinheit sich in der Verriegelungskonfiguration befindet, die erste und zweite Vorrichtung (22, 23) um einen Abstand (D) getrennt sind, der den vorbestimmten Wert nicht überschreitet, und damit, wenn die Deckel-Untereinheit sich in der Entriegelungsvorrichtung befindet, die erste und zweite Vorrichtung (22, 23) um einen Abstand (D) getrennt sind, der den vorbestimmten Wert überschreitet.

2. Gerät (1) nach Anspruch 1, **dadurch gekennzeichnet, dass** die erste Vorrichtung (22) von dem Träger (10) getragen ist, während die zweite Vorrichtung (23) von dem Deckel (3) getragen ist.

3. Gerät (1) nach Anspruch 2, **dadurch gekennzeichnet, dass** die erste Vorrichtung (22) durch ein unabhängiges Modul (24) geformt ist, das gestaltet ist, um abnehmbar an dem Träger (10) befestigt zu sein, wobei das unabhängige Modul (24) und der Träger (10) bevorzugt mit jeweiligen komplementären Befestigungsmitteln (25, 26) versehen sind, die gestaltet sind, um mittels magnetischer Anziehungskraft zusammenzuwirken, um das unabhängige Modul (24) am Träger (10) zu befestigen.

4. Gerät (1) nach einem der Ansprüche 1 bis 3, **dadurch gekennzeichnet, dass** die erste Vorrichtung (22) einen Sensor (22A) einschließt, der zum Erarbeiten des Informations- und/oder Steuersignals ausgehend von einem physischen Größenwert gestaltet ist, den der Abstand (D) zwischen der ersten und zweiten Vorrichtung (22, 23) variieren kann.

5. Gerät (1) nach Anspruch 4, **dadurch gekennzeichnet, dass** der Sensor (22A) ist:
- entweder ein magnetischer Sensor, in diesem Fall beinhaltet die zweite Vorrichtung (23) ein magnetisches Element, das zum Erregen des Sensors (22A) gestaltet ist, wenn der die erste und zweite Vorrichtung (22, 23) trennende Abstand den vorbestimmten Wert nicht überschreitet, damit der Sensor (22A) als Antwort das Informations- und/oder Steuersignal erarbeitet,
- oder einen Kontaktsensor, in diesem Fall beinhaltet die zweite Vorrichtung (23) ein Stellglied, das dazu bestimmt ist, mit dem Sensor (22A) in Kontakt zu kommen, wenn die Deckel-Untereinheit sich in der Verriegelungskonfiguration befindet, um den Sensor (22A) zu betätigen, damit dieser als Antwort das Informations- und/oder Steuersignal erarbeitet.

6. Gerät (1) nach Anspruch 4, **dadurch gekennzeichnet, dass** der Sensor (22A) ein Temperatursensor ist, während die zweite Vorrichtung (23) eine Öffnung (23A) umfasst, die durch den Deckel (3) ausgespart ist, um dem Temperatursensor (22A) zu erlauben, auf die innerhalb des Geräts (1) herrschende Temperatur oder auf ein Bild derselben zuzugreifen, wenn die Deckel-Untereinheit sich in der Verriegelungskonfiguration befindet.

7. Gerät (1) nach Anspruch 6, **dadurch gekennzeichnet, dass** die zweite Vorrichtung (23) ein Druckregulierungsorgan (4) bildet, das gestaltet ist, um zu verhindern, dass der innerhalb des Geräts herrschende Druck einen vorbestimmten Schwellenwert übersteigt.

8. Gerät (1) nach Anspruch 7, **dadurch gekennzeichnet, dass** das Druckregulierungsorgan (4) ein Ventil enthält, das der durch den Deckel (3) ausgesparten Öffnung (23A) zugeordnet ist, wobei das Ventil selbst einen Verschluss (40) enthält, der zwischen einer Verschlussposition, in der er den innerhalb des Geräts (1) enthaltenen Dampf am Austreten durch die Öffnung (23A) aus dem Gerät (1) hindert, und einer Öffnungsposition mobil ist, in der er der innerhalb des Geräts (1) enthaltenen Dampf erlaubt, durch die Öffnung (23A) aus demselben gemäß einer vorbestimmten Austrittsbahn auszutreten, wobei der Temperatursensor (22A) gestaltet ist, um sich auf der Austrittsbahn zu befinden, wenn die Deckel-Untereinheit sich in der Verriegelungskonfiguration befindet, um die Temperatur des Dampfes an seinem Austritt aus dem Gerät (1) zu bestimmen, wobei das Ventil bevorzugt mit einem Kanalisationsorgan des Dampfes versehen ist, das gestaltet ist, um dem Dampf, der aus dem Gerät (1) austritt, eine deutlich vertikale Austrittsbahn von unten nach oben zu ermöglichen, wobei der Temperatursensor (22A) bevorzugt dazu bestimmt ist, das Ventil zu überragen, wenn die Deckel-Untereinheit sich in der Verriegelungskonfiguration befindet.

9. Gerät (1) nach Anspruch 8, **dadurch gekennzeichnet, dass** das Ventil gemäß der vertikalen Richtung (W-W') eine deutlich invariable Höhe über alles (H) aufweist.

10. Gerät (1) nach einem der Ansprüche 6 bis 9, **dadurch gekennzeichnet, dass** die erste Vorrichtung (22) ein ringförmiges Element (22B) aufweist, das einen Innenraum (22C) begrenzt, der durch das ringförmige Element (22B) umgeben ist und der den Temperatursensor (22A) aufnimmt, wobei die erste Vorrichtung (22) bevorzugt einen Hauptkörper (220) umfasst, der den Temperatursensor (22A) und das ringförmige Element (22B) derart trägt, dass sie bevorzugt lateral aus dem Hauptkörper (220) als Auskragung hervorstehen, um den Deckel (3) zu überragen.

11. Gerät (1) nach einem der Ansprüche 1 bis 10, **dadurch gekennzeichnet, dass** das genannte Verriegelungssystem ein Bajonett-Verriegelungssystem ist, wobei der Träger (10) an dem Deckel (3) derart befestigt ist, dass Letzterer relativ zum Träger (10) zwischen den zwei Position gemäß einer zentralen vertikalen Achse (X-X') schwenken kann, wobei die vorbestimmte relative Anordnung dem Bajonett-Verriegelungssystem das Verriegeln des Deckels (3) an dem Behälter (2) durch Schwenken des Deckels (3) relativ zum Träger (10) gemäß der zentralen vertikalen Achse (X-X') erlaubt.

12. Gerät (1) nach Anspruch 11, **dadurch gekennzeichnet, dass** es ein Steuerorgan (11) der Verriegelung/Entriegelung umfasst, das derart an dem Träger (10) befestigt ist, dass es per Hand relativ zu Letzterer zwischen der Verriegelungs- und der Entriegelungsposition verschoben werden kann, wobei das Gerät (1) eine Umwandlungsvorrichtung der Verschiebung des Steuerorgans (1) durch Verschieben des Deckels (3) relativ zum Träger (10) gemäß der zentralen vertikalen Achse (X-X') umfasst.

13. Gerät (1) zum Garen von Nahrungsmitteln unter Druck nach Anspruch 12, **dadurch gekennzeichnet, dass** das Steuerorgan (11) schwenkbar relativ zum Träger (10) gemäß einer radialen Schwenkachse (Y-Y') montiert ist, die senkrecht zur zentralen vertikalen Achse (X-X') ist, wobei das Steuerorgan (11) bevorzugt einen Griff (11A) umfasst.

14. Gerät (1) zum Garen von Nahrungsmitteln unter Druck nach einem der Ansprüche 12 und 13, **dadurch gekennzeichnet, dass** der Träger (10) und der Behälter (2) gestaltet sind, um zu interagieren, sobald die Deckel-Untereinheit in Entriegelungskonfiguration und der Behälter (2) gemäß der vorbestimmten relativen Anordnung vereint sind, um den Träger (10) deutlich daran zu hindern, relativ zum Behälter (2) zu schwenken, wenn das Steuerorgan (11) zwischen seiner Entriegelungs- und Verriegelungsposition verschoben ist.

15. Gerät (1) zum Garen von Nahrungsmitteln unter Druck nach einem der Ansprüche 1 bis 14, **dadurch gekennzeichnet, dass** es ein Sicherheitsmittel an der Öffnung (5) umfasst, das von der ersten und zweiten Vorrichtung unterschiedlich ist und sich unter der Wirkung des in dem Gerät herrschenden Druckpegels zwischen einer Freisetzungskonfiguration, in der es das Entriegeln des Deckels (3) relativ zum Behälter (2) erlaubt, und einer Sperrposition, in der es das Entriegeln des Deckels (3) relativ zum Behälter (2) verbietet, ändern kann, wobei das Sicherheitsmittel (5) bevorzugt ein mobiles Element (5A) umfasst, das gleitend auf dem Deckel (3) zwischen einer hohen Position, in der es geeignet ist, mit einem komplementären Sperrelement (5B) zusammenzuwirken, das von dem Träger (10) getragen ist, um das Verschieben des Deckels (3) relativ zum Träger (10) zu sperren, und einer niedrigen Position, in der es nicht mit dem komplementären Element eingreift, wodurch das Verschieben des Deckels (3) relativ zum Träger (10) erlaubt wird.

## Claims

1. A cooking utensil (1) for cooking food under pressure including a vessel (2), a lid (3) and a locking system, said cooking utensil being **characterized in that** it includes a lid subassembly that includes both said lid (3) and also a support (10) attached to said lid (3) in such a manner that said lid can move relative to said support (10) between two positions corresponding respectively to an unlocking configuration and to a locking configuration of said lid subassembly, the lid subassembly and the vessel (2) being designed to be united in at least one predetermined relative arrangement enabling said locking system to lock the lid (3) to the vessel (2) by the lid (3) being moved relative to the support (10) in order to cause the lid subassembly to go from its unlocking configuration to its locking configuration, said lid subassembly including a first device (22) and a second device (23), which, on condition that said first and second devices (22, 23) are separated by a distance (D) not exceeding a predetermined value, is capable of exerting an influence on the first device (22) so that said first device (22) responds by delivering an information and/or control signal, said support (10) and said lid (3) incorporating respective ones of said first and second devices (22, 23) so that, when said lid subassembly is in its locking configuration, said first and second devices (22, 23) are separated by a distance (D) that does not exceed said predetermined value, and so that, when said lid subassembly is in its unlocking configuration, said first and second devices (22, 23) are separated by a distance (D) that exceeds said predetermined value.

2. A utensil (1) according to claim 1, **characterized in that** said first device (22) is carried by said support (10) while said second device (23) is carried by said lid (3).

3. A utensil (1) according to claim 2, **characterized in that** said first device (22) is formed by an independent module (24) designed to be attached removably to said support (10), said independent module (24) and said support (10) being preferably provided with respective complementary attachment means (25, 26) designed to co-operate by magnetic attraction in order to attach said independent module (24) to the support (10) in removable manner.

4. A utensil (1) according to any one of claims 1 to 3, **characterized in that** said first device (22) includes a sensor (22A) designed to generate said information and/or control signal from a value for a physical magnitude that the distance (D) between said first and second devices (22, 23) can cause to vary.

5. A utensil (1) according to claim 4, **characterized in that** said sensor (22A) is:
- either a magnetic sensor, in which case said second device (23) incorporates a magnetic element designed to excite the sensor (22A) when the distance separating said first and second devices (22, 23) does not exceed said predetermined value so that said sensor (22A) responds by generating said information and/or control signal,
- or a contact sensor, in which case said second device (23) incorporates an actuator designed to come into contact with said sensor (22A), when said lid subassembly is in the locking configuration, so as to actuate said sensor (22A) so that said sensor responds by generating said information and/or control signal.

6. A utensil (1) according to claim 4, **characterized in that** said sensor (22A) is a temperature sensor, while said second device (23) is provided with an orifice (23A) provided through the lid (3) in order to enable the temperature sensor (22A) to be able to access the temperature prevailing inside the utensil (1) or an image of said temperature when said lid assembly is in the locking configuration.

7. A utensil (1) according to claim 6, **characterized in that** said second device (23) forms a pressure regulation member (4) designed to prevent the pressure prevailing inside the utensil from exceeding a predetermined setpoint value.

8. A utensil (1) according to claim 7, **characterized in that** said pressure regulation member (4) includes a valve associated with said orifice (23A) provided through the lid (3), said valve itself including a valve member (40) mounted to move between a closure position in which it prevents the steam contained in the utensil (1) from escaping from the utensil (1) via the orifice (23A) and an opening position in which it allows the steam contained in the utensil (1) to escape from said utensil via the orifice (23A) and along a predetermined escape path, said temperature sensor (22A) being designed to be in said escape path, when said lid subassembly is in the locking configuration, so as to determine the temperature of the steam exiting from the utensil (1), said valve being preferably provided with a steam channeling member designed to impart to the steam escaping from the utensil (1) an upward escape path that is substantially vertical, said temperature sensor (22A) being preferably designed to come to overlie said valve when said lid subassembly is in the locking configuration.

9. A utensil (1) according to claim 8, **characterized in that**, in the vertical direction (W-W'), said valve has an overall height (H) that is substantially invariable.

10. A utensil (1) according to any one of claims 6 to 9, **characterized in that** said first device (22) includes an annular element (22B) defining an internal space (22C) that is surrounded by said annular element (22B) and that receives said temperature sensor (22A), said first device (22) preferably including a main body (220) that carries said temperature sensor (22A) and said annular element (22B) in such a manner that they project preferably laterally from said main body (220), and are cantilevered out to overlie the lid (3).

11. A utensil (1) according to any one of claims 1 to 10, **characterized in that** said locking system is a bayonet-fitting locking system, said support (10) being attached to said lid (3) in such a manner that said lid can pivot relative to said support (10) between said two positions about a central vertical axis (X-X'), said predetermined relative arrangement enabling said bayonet-fitting locking system to lock the lid (3) to the vessel (2) by the lid (3) pivoting relative to the support (10) about said central vertical axis (X-X').

12. A cooking utensil (1) for cooking food under pressure according to claim 11, **characterized in that** it includes a control member (11) for controlling locking/unlocking, which control member is attached to said support (10) in such a manner as to be capable of being moved manually relative to said support (10) between locking and unlocking positions, said utensil (1) including a transformation device for transforming the movement of the control member (11) into pivoting of the lid (3) relative to the support (10) about said central vertical axis (X-X').

13. A cooking utensil (1) for cooking food under pressure according to claim 12, **characterized in that** said control member (11) is mounted to pivot relative to said support (10) about a radial axis of pivoting (Y-Y') that is perpendicular to said central vertical axis (X-X'), said control member (11) comprising preferably a looped handle (11A).

14. A cooking utensil (1) for cooking food under pressure according to any one of claims 12 and 13, **characterized in that** said support (10) and said vessel (2) are designed to interact, whenever the lid subassembly in the unlocking configuration and the vessel (2) are united in said predetermined relative arrangement, in order substantially to prevent said support (10) from being able to pivot relative to the vessel (2) when the control member (11) is moved between its unlocking and locking positions.

15. A cooking utensil (1) for cooking food under pressure according to any one of claims 1 to 14, **characterized in that** it includes opening safety means (5) that are distinct from said first and second devices, and that, under the effect of the level of pressure prevailing in the cooking enclosure, are suitable for going between a releasing configuration, in which they allow the lid (3) to be unlocked relative to the vessel (2), and a blocking position in which they prevent the lid (3) from being unlocked relative to the vessel (2, said safety means (5) including preferably a moving element (5A) mounted to slide on the lid (3) between a high position in which it is capable of co-operating with a complementary blocking element (5B) carried by the support (10), in order to prevent the lid (3) from moving relative to the support (10), and a low position in which it does not interfere with the complementary element, thereby allowing the lid (3) to move relative to the support (10).
